# EUROPEAN PATENT SPECIFICATION

(11) **EP 3 669 015 B1**
(45) Date of publication and mention of the grant of the patent: **02.08.2023**
(21) Application number: 18799972.7
(22) Date of filing: 23.10.2018
(51) Int. Cl.: C23C 22/56, C23C 22/66, B05D 3/00, C09D 5/00, C09J 5/02, C22C 21/00, C23C 22/77, C23C 22/78, C23F 1/02, C23F 1/20, C23F 1/36, C23G 1/12, C23G 1/22

(54) **ALUMINUM ALLOY ARTICLES HAVING IMPROVED BOND DURABILITY AND INERT SURFACE ALUMINUM ALLOY ARTICLES AND METHODS OF MAKING AND USING THE SAME**
ALUMINIUMLEGIERUNGSARTIKEL MIT VERBESSERTER HAFTBESTÄNDIGKEIT UND ALUMINIUMLEGIERUNGSARTIKEL MIT INERTER OBERFLÄCHE SOWIE VERFAHREN ZUR HERSTELLUNG UND VERWENDUNG DAVON
ARTICLES EN ALLIAGE D'ALUMINIUM AYANT UNE STABILITÉ DE LIAISON AMÉLIORÉE ET ARTICLES EN ALLIAGE D'ALUMINIUM À SURFACE INERTE ET PROCÉDÉS DE FABRICATION ET D'UTILISATION DE CEUX-CI

(30) Priority: 21.12.2017 US 201762608618 P; 05.10.2018 US 201862741691 P
(43) Date of publication of application: 24.06.2020
(73) Proprietor: Novelis, Inc., Atlanta, GA 30326 (US)
(72) Inventor: LI, Liangliang, Atlanta, Georgia 30339 (US); MACFARLANE, Theresa Elizabeth, East Woodstock, Georgia 30189 (US); REDMOND, Peter Lloyd, Acworth, Georgia 30101 (US); YUAN, Yudie, Roswell, Georgia 30075 (US); BUCKINGHAM, Stephen, Decatur, Georgia 30030 (US); MANAVBASI, Alp, Kennesaw, Georgia 30144 (US); VEGA, Luis Fanor, Woodstock, Georgia 30188 (US); WU, Cedric, Marietta, Georgia 30062 (US)
(74) Representative: Dey, Michael
(86) International application number: PCT/US2018/057053
(87) International publication number: WO 2019/125595

(56) References cited:
- EP-A1- 3 219 828
- EP-A2- 1 231 296
- EP-B1- 1 328 600
- WO-A1-2016/094380
- JP-A- 2000 345 364
- JP-A- 2017 203 209
- KR-A- 20130 090 371
- US-A1- 2014 037 984

## Description

### FIELD

The present disclosure generally provides aluminum alloy articles and the surface features of the same. The disclosure relates to aluminum alloy articles having improved bond durability at certain surfaces of the article and corrosion resistance. The disclosure also provides methods of making such materials, for example, via a selective etching process, as well as methods of using such articles in applications that involve bonding the article to other articles, such as other aluminum articles. The disclosure also provides articles of manufacture made from such articles, including bonded aluminum articles. The disclosure also provides various end uses of such articles, such as in automotive, transportation, electronics, and industrial applications.

### BACKGROUND

Aluminum alloy articles are desirable for use in a number of different applications, especially those where lightweight, high strength, and high durability are desirable. For example, aluminum alloys are increasingly replacing steel as a structural component of automobiles and other transportation equipment. Because aluminum alloys are generally about 2.8 times less dense than steel, the use of such materials reduces the weight of the equipment and allows for substantial improvements in energy efficiency. Even so, the use of aluminum alloy articles can pose certain challenges.

One particular challenge relates to the bonding of various aluminum alloy articles together to form a finished article of manufacture, such as, for example, a frame or other body part of a vehicle. When steel is used for such applications, the various individual articles can be bonded together by traditional welding processes. But, such welding processes are not always appropriate for the bonding of articles made from aluminum alloys. Therefore, such aluminum alloy articles are often bonded together using adhesive compositions (for example, epoxy resins) or other welding materials that are suitable for bonding aluminum alloy articles to other aluminum alloy articles or articles made of other materials. Even so, if such aluminum alloy articles are to compete effectively with steel products in certain market segments, the bonding processes must result in bonds that are strong and that exhibit long-term durability over the potential lifetime of the finished article of manufacture. Original equipment manufacturers (OEMs) continue to face pressure from regulators and consumers to offer more energy-efficient vehicles that are also safe and durable. Shifting from the use of steel to the use of aluminum alloys plays a key role in achieving this goal. Therefore, there is a continuing need to develop aluminum alloy articles that exhibit high bond durability when used in the context of bonding processes, for example, in the context of adhesive bonding with epoxy resins.

Ideally, the aluminum alloy articles also exhibit strong corrosion resistance. Otherwise, the aluminum alloy articles would be unsuitable for use in automotive, transportation, electronics, and industrial applications.

EP 3 219 828 A1 describes an aluminum alloy material including an oxide film formed on at least a part thereof, a joined body and an automotive part each using the aluminum alloy material and a method for manufacturing an aluminum alloy material. The aluminum alloy material comprises an aluminum alloy substrate and an oxide film comprising 0.1-30 at% Mg, 12-80 at% Si and less than 0.6 at% Cu. JP 2017-203209 A describes an aluminum alloy article having an oxide film formed by applying an etching treatment. KR 2013-0090371 A1 describes an aluminum alloy plate having a surface oxide film. EP 1 231 296 A2 discloses a liquid composition suitable for etching and simultaneous desmutting of aluminum and aluminum alloys comprising water; and an acid source comprising sulfuric acid and nitric acid; and a non-fluorine containing etchant source comprising phosphoric acid; and a stabilized oxidant.

### SUMMARY

The invention is defined in the appended claims.

The present invention relates to an aluminum alloy article, comprising an aluminum alloy material that comprises from 0.2 to 1.4 wt. % Si; from 0.4 to 5.0 wt. % Mg; from 0.01 to 2.0 wt. % Cu; from 0.05 to 0.50 wt. % Fe; up to 0.25 wt. % Mn; up to 0.25 wt. % Cr; up to 0.15 wt. % Zn; up to 0.20 wt. % Ti; up to 0.05 wt. % Zr; up to 0.05 wt. % Pb; optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and up to 0.15 wt. % impurities; with the remainder being Al; wherein the aluminum alloy article comprises a subsurface portion and a bulk portion, wherein the subsurface portion extends from an external surface of the aluminum alloy article to a depth of up to 5 µm, wherein the subsurface portion of the aluminum alloy article has a higher concentration of Cu as compared to the bulk portion, and wherein an atomic concentration ratio of Cu to Mg in the subsurface portion is from about 0.2 to about 5.0.

The present invention further relates to a method of making a surface-modified aluminum alloy article, the method comprising providing an aluminum alloy article having a subsurface portion and a bulk portion, wherein the aluminum alloy article comprises an aluminum alloy material that comprises from 0.2 to 1.4 wt. % Si; from 0.4 to 5.0 wt. % Mg; from 0.01 to 2.0 wt. % Cu; from 0.05 to 0.50 wt. % Fe; up to 0.25 wt. % Mn; up to 0.25 wt. % Cr; up to 0.15 wt. % Zn; up to 0.20 wt. % Ti; up to 0.05 wt. % Zr; up to 0.05 wt. % Pb; optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and up to 0.15 wt. % impurities;
with the remainder being Al; and contacting a surface of the subsurface portion with a surface-modifying composition, wherein the treating includes carrying out an acid etch and an alkaline wash, whereby the acid etch precedes the alkaline wash; wherein the subsurface portion of the treated aluminum alloy article has a higher concentration of Cu as compared to the bulk portion, wherein the subsurface portion extends from an external surface of the aluminum alloy article to a depth of up to 5 µm, and wherein an atomic concentration ratio of Cu to Mg in the subsurface portion is from about 0.2 to about 5.0.

The covered embodiments of this disclosure are defined by the claims, not this summary. This summary provides a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The present disclosure provides novel aluminum alloy articles having one or more surfaces that provide improved bond durability. The present disclosure also provides methods of making such aluminum alloy articles and various articles of manufacture formed from such aluminum alloy articles, including bonded articles of manufacture. In some examples, the aluminum alloy article is a rolled article, such as an aluminum alloy sheet, where the surface of the sheet exhibits improved bond durability.

In a first aspect, the disclosure provides an aluminum alloy article comprising Cu and Mg, among others, as alloying elements, wherein the aluminum alloy article comprises a subsurface portion and a bulk portion and wherein an atomic concentration ratio of Cu to Mg in the subsurface portion is from about 0.2 to about 5.0. In some examples, the rolled aluminum alloy article is an aluminum alloy sheet. Such sheets can have any suitable temper (e.g., an O temper or an F temper or any temper ranging from a T1 to T9 temper) and any suitable gauge. In some cases, the aluminum alloy articles are 5xxx series aluminum alloys, 6xxx series aluminum alloys, or 7xxx series aluminum alloys, as provided herein.

In a second aspect, the disclosure provides a method of making a surface-modified aluminum alloy article, the method comprising: providing an aluminum alloy article having a subsurface portion and a bulk portion, wherein the aluminum alloy article comprises an aluminum alloy material that comprises Mg and Cu as alloying elements; and contacting a surface of the subsurface portion with a surface-modifying composition, wherein an atomic concentration ratio of Cu to Mg in the subsurface portion is from about 0.2 to about 5.0.

In a third aspect, the disclosure provides an aluminum alloy article made by the process of the second aspect or any embodiments thereof.

In a fourth aspect, the disclosure provides an article of manufacture, which is comprised of an aluminum alloy article of the first or third aspects, or any embodiments thereof. In some embodiments, the article of manufacture comprises a rolled aluminum alloy sheet. Examples of such articles of manufacture include, but are not limited to, an automobile, a truck, a trailer, a train, a railroad car, an airplane, a body panel or part for any of the foregoing, a bridge, a pipeline, a pipe, a tubing, a boat, a ship, a storage container, a storage tank, an article of furniture, a window, a door, a railing, a functional or decorative architectural piece, a pipe railing, an electrical component, a conduit, a beverage container, a food container, or a foil.

Herein described is a bonded article of manufacture, comprising a first aluminum alloy article and a second metal or alloy article; wherein a surface of the first aluminum alloy article and a surface of the second metal or alloy article are bonded together; and wherein one or both of the first aluminum alloy article and the second metal or alloy article are an aluminum alloy article of the first or third aspects, or any embodiments thereof. In some embodiments, the surface of the first aluminum alloy article and the surface of the second metal or alloy article are bonded together by adhesive bonding using, for example, an adhesive composition, such as an epoxy resin.

Herein described is a method of bonding aluminum alloy articles as described herein to a second metal or alloy article (e.g., a second aluminum alloy article), the method comprising: providing a first aluminum alloy article and a second metal or alloy article, wherein one or both of the first aluminum alloy article and the second metal or alloy article are an aluminum alloy article of the first or third aspects, or any embodiments thereof; and bonding a surface of the first aluminum alloy article and a surface of the second metal or alloy article. Optionally, the second metal or alloy article comprises steel or a composite material, such as a carbon composite. In some embodiments, the bonding comprises adhesive bonding, for example, with an adhesive composition, such as an epoxy resin.

Additional aspects and embodiments are set forth in the detailed description, claims, and non-limiting examples, which are included herein.

### BRIEF DESCRIPTION OF THE DRAWINGS

Figure 1 shows the atomic concentration of Mg in a test sample at depths up to 125 nm for B 1, B2, and B3, as recorded by XPS.
Figure 2 shows the atomic concentration of Mg in a test sample at depths up to 125 nm for B4, B5, and B6, as recorded by XPS.
Figure 3 shows the atomic concentration of Cu in a test sample at depths up to 125 nm for B 1, B2, and B3, as recorded by XPS.
Figure 4 shows the atomic concentration of Cu in a test sample at depths up to 125 nm for B4, B5, and B6, as recorded by XPS.
Figure 5 shows a plot of the mean number of BD cycles passed for each sample as a function of the atomic concentration ratio of Cu to Mg for each sample.
Figure 6A is a graph showing X-ray photon spectroscopy analysis of surfaces of various aluminum alloy samples according to certain aspects of the present disclosure.
Figure 6B is a graph showing X-ray photon spectroscopy analysis of surfaces of various aluminum alloy samples after sputtering according to certain aspects of the present disclosure.

### DETAILED DESCRIPTION

In a first embodiment, the present disclosure provides aluminum alloy articles that exhibit novel compositional characteristics near the surface, for example, the beneficial enrichment of Cu coupled with the partial removal of Mg. In some embodiments, such articles can exhibit surprisingly improved bond durability with respect to articles lacking such features.

### Definitions and Descriptions

The terms "invention," "the invention," "this invention" and "the present invention" used herein are intended to refer broadly to all of the subject matter of this patent application and the claims below. Statements containing these terms should be understood not to limit the subject matter described herein or to limit the meaning or scope of the patent claims below.

In this description, reference is made to alloys identified by AA numbers and other related designations, such as "series" or "6xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, the meaning of "a," "an," and "the" includes singular and plural references unless the context clearly dictates otherwise.

As used herein, a "plate" generally has a thickness of greater than 15 mm. For example, a plate may have a thickness of greater than 15 mm, greater than 20 mm, greater than 25 mm, greater than 30 mm, greater than 35 mm, greater than 40 mm, greater than 45 mm, greater than 50 mm, or greater than 100 mm.

As used herein, a "shate" (also referred to as a sheet plate) generally has a thickness of 4 mm to 15 mm. For example, a shate may have a thickness of 4 mm, 5 mm, 6 mm, 7 mm, 8 mm, 9 mm, 10 mm, 11 mm, 12 mm, 13 mm, 14 mm, or 15 mm.

As used herein, a "sheet" generally has a thickness of less than 4 mm. For example, a sheet may have a thickness of no more than 3 mm, no more than 2 mm, no more than 1 mm, no more than 0.5 mm, no more than 0.3 mm, or no more than 0.1 mm.

Reference is made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. A T1 condition or temper refers to an aluminum alloy after cooling from hot working and natural aging (e.g., at room temperature). A T2 condition or temper refers to an aluminum alloy after cooling from hot working, cold working, and natural aging. A T3 condition or temper refers to an aluminum alloy after solution heat treatment (i.e., solutionization), cold working, and natural aging. A T4 condition or temper refers to an aluminum alloy after solution heat treatment followed by natural aging. A T5 condition or temper refers to an aluminum alloy after cooling from hot working and artificial aging. A T6 condition or temper refers to an aluminum alloy after solution heat treatment followed by artificial aging (AA). A T7 condition or temper refers to an aluminum alloy after solution heat treatment and is then stabilized. A T8x condition or temper refers to an aluminum alloy after solution heat treatment, followed by cold working and then by artificial aging. A T9 condition or temper refers to an aluminum alloy after solution heat treatment, followed by artificial aging, and then by cold working.

All ranges disclosed herein are to be understood to encompass any endpoints and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10.

As used herein, terms such as "cast product," "cast metal product," "cast aluminum product," "cast aluminum alloy product," and the like refer to a product produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method.

As used herein, "bond durability" refers to an ability of a bonding agent bonding two articles together to withstand cycled mechanical stress after exposure to environmental conditions that initiate failure of the bonding agent. Bond durability is characterized in terms of number of mechanical stress cycles applied to the bound articles until the bond fails.

As used herein, "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C.

In various examples and embodiments, the aluminum alloys are described in terms of their elemental composition in percent by weight (wt. %). In each alloy, the remainder is aluminum, if not otherwise indicated. In some embodiments, the alloys disclosed herein have a maximum percent by weight of 0.15% for the sum of all impurities.

### Aluminum Alloy Article Having Improved Bond Durability

### Aluminum Alloy Article

Described herein is an aluminum alloy article that includes an aluminum alloy material. In some embodiments, the aluminum alloy article as described herein includes one or two rolled surfaces. In some such embodiments, the aluminum alloy article is a rolled aluminum alloy sheet or shate, which can be formed by hot rolling, cold rolling, or any combination thereof, as further described below. Optionally, the aluminum alloy article can be a rolled aluminum alloy sheet. The aluminum alloy article includes a subsurface portion and a bulk portion.

As used herein, the term "subsurface" refers to the portion of the aluminum alloy article that extends from the exterior surface of the aluminum alloy article into an interior of the article to a depth of up to 5 µm, but generally much less. For example, the subsurface can refer to the portion of the alloy that extends into the interior of the alloy article from (and including) the exterior surface to a depth of 0.01 µm, 0.05 µm, 0.10 µm, 0.15 µm, 0.20 µm, 0.25 µm, 0.3 µm, 0.35 µm, 0.4 µm, 0.45 µm, 0.50 µm, 0.55 µm, 0.60 µm, 0.65 µm, 0.70 µm, 0.75 µm, 0.80 µm, 0.85 µm, 0.9 µm, 0.95 µm, 1.0 µm, 1.5 µm, 2.0 µm, 2.5 µm, 3.0 µm, 3.5 µm, 4.0 µm, 4.5 µm, or 5.0 µm, or anywhere in between. In some embodiments, the subsurface extends from the external surface to a depth ranging from 100 nm to 200 nm within the interior of the aluminum alloy article. In some further such embodiments, the subsurface extends from the external surface to a depth of 100 nm, 110 nm, 120, nm, 130 nm, 140 nm, 150 nm, 160 nm, 170 nm, 180 nm, 190 nm, or 200 nm within the interior of the aluminum alloy article. The portion of the aluminum alloy article excluding the subsurface portion (e.g., the remainder of the alloy article) is referred to herein as the "bulk" or "bulk portion" of the aluminum alloy article. Note that, for articles having two rolled surfaces, such as with an aluminum alloy sheet or shate, the article can have two subsurface portions with a bulk portion lying between them.

The term "portion," as used herein, should not be construed to refer to layers, as in layers of a clad material. Rather, the rolled surface and subsurface portions of the aluminum alloy articles disclosed herein have a unitary structure, but have compositional differences in alloying elements at different depths from the surface within that structure.

The aluminum alloy material in the aluminum alloy article comprises Cu and Mg, among others, as alloying elements. The atomic concentrations of the alloying elements within the portions of the aluminum alloy article vary based on the particular location (e.g., depth) within the aluminum alloy article, the identity of the element, and the methods of preparing, processing, and treating the aluminum alloy article. The atomic concentrations can be measured using techniques as known to those of ordinary skill in the art, including x-ray photoelectron spectroscopy (XPS).

Cu and Mg, for example, can be present in both the subsurface portion and the bulk portion of the aluminum alloy article. The atomic concentration ratio of Cu to Mg in the subsurface portion of the aluminum alloy article can have any suitable value, generally ranging from about 0.15 to about 5.0. In some cases, the atomic concentration ratio of Cu to Mg in the subsurface portion of the aluminum alloy article is at least about 0.15, at least about 0.16, at least about 0.17, at least about 0.18, at least about 0.19, at least about 0.20, at least about 0.21, at least about 0.22, at least about 0.23, at least about 0.24, or at least about 0.25. In some cases, the atomic concentration ratio of Cu to Mg in the subsurface portion of the aluminum alloy article is no more than 5.0, no more than 4.5, no more than 4.0, no more than 3.5, no more than 3.0, no more than 2.5, no more than 2.0, no more than 1.5, no more than 1.0, or no more than 0.5. In some cases, the atomic concentration ratio of Cu to Mg in the subsurface portion of the aluminum alloy article ranges from 0.2 to 5.0, from 0.2 to 4.5, from 0.2 to 4.0, from 0.2 to 3.5, from 0.2 to 3.0, from 0.2 to 2.5, from 0.2 to 2.0, from 0.2 to 1.5, from 0.2 to 1.0, or from 0.2 to 0.5. The atomic concentration ratio of Cu to Mg can be calculated by taking the simple ratio of the atomic concentration of Cu to that of Mg in the subsurface portion, where the concentration is measured using, for example, XPS as described above.

The aluminum alloy article, treated according to methods as described herein (e.g., etched), can have an atomic concentration ratio of Cu to Mg in the subsurface portion that is different from the Cu to Mg atomic concentration ratio in the subsurface portion of an untreated aluminum alloy article. For example, a treated (e.g., an etched) aluminum alloy article can have a Cu to Mg atomic concentration ratio in the subsurface portion that is higher than the Cu to Mg atomic concentration ratio in the subsurface portion of an untreated (e.g., an unetched) aluminum alloy article. Such a treated article can be characterized as having a Mg depletion in the subsurface portion as compared to the subsurface portion of an untreated article.

In addition, the aluminum alloy articles as described herein can have varying distributions of Mg within the subsurface portion and the bulk portion of the article. For example, the Mg concentration can be lower in the subsurface portion of a particular article as compared to the bulk portion of the same article. In other examples, the Mg concentration can be higher in the subsurface portion of a particular article as compared to the bulk portion of the same article. In still other examples, the Mg concentration in the subsurface portion of a particular article can be equal to the Mg concentration in the bulk portion of the same article.

The subsurface portion of the aluminum alloy article has a higher concentration of Cu as compared to the bulk portion.

In some cases, the subsurface portion of the treated aluminum alloy article can have a higher concentration of Cu as compared to the subsurface of an untreated article or the bulk portion of the treated article. Such articles, exhibiting a higher Cu concentration in the subsurface portion of the treated aluminum alloy article as compared to a subsurface portion of an untreated aluminum alloy article or as compared to bulk portion of the same treated aluminum alloy article, are characterized as having a Cu enrichment in the subsurface portion. In some embodiments, the aluminum alloy articles disclosed herein exhibit both Mg depletion and Cu enrichment.

In addition, the treatment methods described herein can cause the concentration of certain alloying elements within the treated aluminum alloy article to be different in the subsurface portion in comparison to the bulk portion. For example, the subsurface portion of a treated aluminum alloy article can have a Cu to Mg atomic concentration ratio in the subsurface portion that is higher than the Cu to Mg atomic concentration ratio in the bulk portion of the treated aluminum alloy article. The higher Cu to Mg atomic concentration ratio in the subsurface portion of the treated aluminum alloy article can be achieved by using, for example, a treatment process that results in a loss of Mg from the subsurface portion of the aluminum alloy article. In some examples, the subsurface portion of a treated aluminum alloy article can have a Cu to Mg atomic concentration ratio in the subsurface portion that is lower than the Cu to Mg atomic concentration ratio in the bulk portion of the treated aluminum alloy article.

As illustrated in the Examples below, articles exhibiting such compositional features have certain beneficial properties. For example, aluminum alloy articles exhibiting Mg depletion and/or Cu enrichment can have improved bond durability, which means that such articles may be more suitable for use in contexts where it is desirable to bond the article to other articles. In particular, Cu enrichment can surprisingly improve bond durability. Thus, by enriching Cu near the surface, coupled with depleting Mg, through the methods described herein, one can tune the surface to have a cathodic character suitable for good bond durability.

As noted above, the treatment methods disclosed herein can be used to produce an aluminum alloy article having Mg depletion. This Mg depletion can be determined by using XPS to calculate the concentration of Mg at different depths from the external surface, and then integrating the resulting curve to determine the atomic concentrations of Mg in the subsurface portion and the bulk portion of the aluminum alloy article. In some such embodiments, the atomic concentration of Mg in the subsurface portion of the treated aluminum alloy article is at least 5%, at least 10%, at least 15%, at least 20%, or at least 25% lower than the atomic concentration of Mg in the subsurface portion of the untreated aluminum alloy article.

Further, in some additional embodiments, the treatment methods disclosed herein can be used to produce an aluminum alloy article having Cu enrichment. This Cu enrichment can be determined by using XPS to calculate the concentration of Cu at different depths from the external surface, and then integrating the resulting curve to determine the atomic concentrations of Cu in the subsurface portion and the bulk portion of the aluminum alloy article. In some such embodiments, the concentration of Cu in the subsurface portion of the aluminum alloy article is at least 5%, at least 10%, at least 15%, at least 20%, at least 40%, at least 60%, at least 80%, at least 100%, at least 150%, or at least 200% greater than the atomic concentration of Cu in the bulk portion of the aluminum alloy article (based on the atomic concentration of Cu in the bulk portion of the aluminum alloy article). Note that "at least 100% greater than," in this context, means that the concentration is at least double, and "at least 200% greater than," in this context, means that the concentration is at least triple, and so forth.

In some further embodiments, it can also be useful to refer to the atomic concentration ratio of Cu to Mg in the subsurface portion of an aluminum alloy article as described herein (e.g., a treated aluminum alloy article) relative to that in the bulk portion of the aluminum alloy article or to that in a subsurface portion of an untreated aluminum alloy article, where such concentration ratios are measured as described above. In general, in instances where the subsurface portion has undergone Mg depletion and/or Cu enrichment, the atomic concentration ratio of Cu to Mg will be higher in the subsurface portion of the aluminum alloy article than in the bulk portion of the aluminum alloy article or than in a subsurface portion of an untreated aluminum alloy article. In some further such embodiments, the atomic concentration ratio of Cu to Mg in the subsurface portion is at least 20%, at least 40%, at least 60%, at least 80%, at least 100%, at least 150%, or at least 200% greater than the atomic concentration ratio of Cu to Mg in the bulk portion (based on the atomic concentration ratio of Cu to Mg in the bulk portion of the aluminum alloy article) or in the subsurface portion of an untreated aluminum alloy article.

In certain instances, certain surface properties may be improved when Cu is dissolved in the aluminum alloy material instead of existing within the metal as intermetallic particles (i.e., agglomerated particles having a particle size greater than 200 nm). Thus, in certain cases, it is desirable that the Cu in the subsurface portion exists in a form such that the subsurface portion has a low concentration of Cu aggregates. Thus, in some embodiments, no more than 10 wt. %, no more than 5 wt. %, no more than 3 wt. %, no more than 1 wt. %, no more than 0.5 wt. %, or no more than 0.1 wt. % of the Cu present in the subsurface portion is in an agglomerated form (i.e., as intermetallic particles having a particle size of greater than 200 nm), based on the total amount of Cu present in the subsurface portion. The aluminum alloy article can be comprised of any suitable aluminum alloy that comprises Cu and Mg as alloying elements. In some such embodiments, the aluminum alloy material is a 5xxx series aluminum alloy, a 6xxx series aluminum alloy, or a 7xxx series aluminum alloy. In such embodiments, the aluminum alloy article can employ any suitable 5xxx series aluminum alloy, 6xxx series aluminum alloy, or 7xxx series aluminum alloy, so long as Cu and Mg are present in the alloy.

In some non-limiting examples, the 5xxx series aluminum alloy can include AA5005, AA5005A, AA5205, AA5006, AA5106, AA5010, AA5110A, AA5016, AA5017, AA5018, AA5018A, AA5019, AA5019A, AA5119, AA5119A, AA5021, AA5022, AA5023, AA5024, AA5026, AA5027, AA5028, AA5040, AA5140, AA5041, AA5042, AA5043, AA5049, AA5149, AA5249, AA5349, AA5449, AA5449A, AA5050, AA5050A, AA5050C, AA5150, AA5051, AA5051A, AA5151, AA5251, AA5251A, AA5351, AA5451, AA5052, AA5252, AA5352, AA5154, AA5154A, AA5154B, AA5154C, AA5254, AA5354, AA5454, AA5554, AA5654, AA5654A, AA5754, AA5854, AA5954, AA5056, AA5356, AA5356A, AA5456, AA5456A, AA5456B, AA5556, AA5556A, AA5556B, AA5556C, AA5257, AA5457, AA5557, AA5657, AA5058, AA5059, AA5070, AA5180, AA5180A, AA5082, AA5182, AA5083, AA5183, AA5183A, AA5283, AA5283A, AA5283B, AA5383, AA5483, AA5086, AA5186, AA5087, AA5187, or AA5088.

In some further non-limiting examples, the 6xxx series aluminum alloy can include AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, A6963, AA6064, AA6064A, AA6065, AA6066, AA6068, AA6069, AA6070, AA6081, AA6181, AA6181A, AA6082, AA6082A, AA6182, AA6091, or AA6092.

In some non-limiting examples, the 7xxx series aluminum alloy can include AA7020, AA7021, AA7039, AA7072, AA7075, AA7085, AA7108, AA7108A, AA7015, AA7017, AA7018, AA7019, AA7019A, AA7024, AA7025, AA7028, AA7030, AA7031, AA7035, AA7035A, AA7046, AA7046A, AA7003, AA7004, AA7005, AA7009, AA7010, AA7011, AA7012, AA7014, AA7016, AA7116, AA7122, AA7023, AA7026, AA7029, AA7129, AA7229, AA7032, AA7033, AA7034, AA7036, AA7136, AA7037, AA7040, AA7140, AA7041, AA7049, AA7049A, AA7149,7204, AA7249, AA7349, AA7449, AA7050, AA7050A, AA7150, AA7250, AA7055, AA7155, AA7255, AA7056, AA7060, AA7064, AA7065, AA7068, AA7168, AA7175, AA7475, AA7076, AA7178, AA7278, AA7278A, AA7081, AA7181, AA7185, AA7090, AA7093, AA7095, or AA7099.

In some embodiments, the aluminum alloy article disclosed herein is comprised of an aluminum alloy material that has the elemental composition set forth in Table 1.

**Table 1**

| **Element** | **Weight Percentage (wt. %)** |
|---|---|
| Si | 0.2-1.4 |
| Mg | 0.4 - 5.0 |
| Cu | 0.01 - 2.0 |
| Fe | 0.05 - 0.5 |
| Mn | 0-0.25 |
| Cr | 0-0.25 |
| Zn | 0-0.15 |
| Ti | 0 - 0.20 |
| Zr | 0-0.05 |
| Pb | 0-0.05 |
| Impurities | 0-0.15 |
| Al | Remainder |

In some such embodiments, the aluminum alloy material has the elemental composition set forth in Table 2.

**Table 2**

| **Element** | **Weight Percentage (wt. %)** |
|---|---|
| Si | 0.4 - 1.0 |
| Mg | 0.5-1.5 |
| Cu | 0.05 - 1.2 |
| Fe | 0.1-0.4 |
| Mn | 0.05 - 0.20 |
| Cr | 0-0.15 |
| Zn | 0-0.15 |
| Ti | 0-0.15 |
| Zr | 0-0.05 |
| Pb | 0-0.05 |
| Impurities | 0-0.15 |
| Al | Remainder |

In some embodiments of any of the foregoing embodiments, the aluminum alloy material includes silicon (Si) in an amount from 0.2% to 1.4%. In some further embodiments of any of the aforementioned embodiments, the alloy compositions have from 0.3% to 1.1% Si, from 0.4% to 1.0% Si, from 0.4% to 0.9% Si, from 0.4% to 0.8% Si, or from 0.4% to 0.7% Si. For example, the aluminum alloy material can include 0.2%, 0.3%, 0.4%, 0.5%, 0.6%, 0.7%, 0.8%, 0.9%, 1.0%, 1.1%, 1.2%, 1.3%, or 1.4% Si. All are expressed in wt. %.

In some embodiments of any of the foregoing embodiments, the aluminum alloy material includes magnesium (Mg) in an amount from 0.4% to 5.0%. In some further embodiments of any of the aforementioned embodiments, the alloy compositions have from 0.4% to 4.5% Mg, from 0.4% to 4.0% Mg, from 0.5% to 3.5% Mg, from 0.5% to 3.0% Mg, or from 0.5% to 2.5% Mg. For example, the aluminum alloy material can include 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, or 5.0% Mg. All are expressed in wt. %.

In some embodiments of any of the foregoing embodiments, the aluminum alloy material includes copper (Cu) in an amount from 0.01% to 2.0%. In some further embodiments of any of the aforementioned embodiments, the alloy compositions have from 0.01% to 1.2% Cu, from 0.05% to 1.1% Cu, from 0.1% to 1.0% Cu, from 0.1% to 0.9% Cu, or from 0.1% to 0.8% Cu. For example, the aluminum alloy material can include 0.01%, 0.03%, 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0% Cu. All are expressed in wt. %.

In some embodiments of any of the foregoing embodiments, the aluminum alloy material includes iron (Fe) in an amount from 0.05% to 0.5%. In some further embodiments of any of the aforementioned embodiments, the alloy compositions have from 0.1% to 0.4% Fe or from 0.1% to 0.3% Fe. For example, the aluminum alloy material can include 0.05%, 0.1%, 0.15%, 0.2%, 0.25%, 0.3%, 0.35%, 0.4%, 0.45%, or 0.5% Fe. All are expressed in wt. %.

In some embodiments of any of the foregoing embodiments, the aluminum alloy material includes manganese (Mn) in an amount of up to 0.25%. In some further embodiments of any of the aforementioned embodiments, the alloy compositions have from 0.05% to 0.20% Mn, from 0.01% to 0.10% Mn, or from 0.02% to 0.05% Mn. For example, the aluminum alloy material can include 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, or 0.25% Mn. In some cases, Mn is not present in the alloy (i.e., 0%). All are expressed in wt. %.

In some embodiments of any of the foregoing embodiments, the aluminum alloy material includes chromium (Cr) in an amount of up to 0.25%, or up to 0.15%. In some further embodiments of any of the aforementioned embodiments, the alloy compositions have from 0.01% to 0.10% Cr or from 0.02% to 0.05% Cr. For example, the aluminum alloy material can include 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, or 0.25% Cr. In some cases, Cr is not present in the alloy (i.e., 0%). All are expressed in wt. %.

In some embodiments of any of the foregoing embodiments, the aluminum alloy material includes zinc (Zn) in an amount of up to 0.15%. In some further embodiments of any of the aforementioned embodiments, the alloy compositions have from 0.01% to 0.10% Zn or from 0.02% to 0.05% Zn. For example, the aluminum alloy material can include 0.01%, 0.02%, 0.03%, 0.04%, 0.05%, 0.06%, 0.07%, 0.08%, 0.09%, 0.10%, 0.11%, 0.12%, 0.13%, 0.14%, or 0.15% Zn. In some cases, Zn is not present in the alloy (i.e., 0%). All are expressed in wt. %.

In some embodiments of any of the foregoing embodiments, the aluminum alloy material includes titanium (Ti) in an amount of up to 0.20%, or up to 0.15%. In some further embodiments of any of the aforementioned embodiments, the alloy compositions have from 0.01% to 0.10% Ti or from 0.02% to 0.05% Ti. For example, the aluminum alloy material can include 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, or 0.20% Ti. In some cases, Ti is not present in the alloy (i.e., 0%). All are expressed in wt. %.

In some embodiments of any of the foregoing embodiments, the aluminum alloy material includes zirconium (Zr) in an amount of up to 0.05%. In some further embodiments of any of the aforementioned embodiments, the alloy compositions have from 0.01% to 0.05% Zr. For example, the aluminum alloy material can include 0.01%, 0.02%, 0.03%, 0.04%, or 0.05% Zr. In some cases, Zr is not present in the alloy (i.e., 0%). All are expressed in wt. %.

In some embodiments of any of the foregoing embodiments, the aluminum alloy material includes lead (Pb) in an amount of up to 0.05%. In some further embodiments of any of the aforementioned embodiments, the alloy compositions have from 0.01% to 0.05% Pb. For example, the aluminum alloy material can include 0.01%, 0.02%, 0.03%, 0.04%, or 0.05% Pb. In some cases, Pb is not present in the alloy (i.e., 0%). All are expressed in wt. %.

In some embodiments of any of the foregoing embodiments, the aluminum alloy material includes one or more elements selected from the group consisting of Sc, Ni, Sn, Be, Mo, Li, Bi, Sb, Nb, B, Co, Sr, V, In, Hf, and Ag in an amount of up to 0.10% (e.g., from 0.01% to 0.10%, from 0.01% to 0.05%, or from 0.03% to 0.05%), based on the total weight of the alloy. For example, the aluminum alloy material can include 0.01%, 0.02%, 0.03%, 0.04%, 0.05%, 0.06%, 0.07%, 0.08%, 0.09%, or 0.10 % of one or more elements selected from the group consisting of Sc, Ni, Sn, Be, Mo, Li, Bi, Sb, Nb, B, Co, Sr, V, In, Hf, and Ag. All are expressed in wt. %.

In some embodiments of any of the foregoing embodiments, the aluminum alloy material includes one or more elements selected from the group consisting of Y, La, Ce, Pr, Nd, Pm, Sm, Eu, Gd, Tb, Dy, Ho, Er, Tm, Yb, and Lu in an amount of up to 0.10% (e.g., from 0.01% to 0.10%, from 0.01% to 0.05%, or from 0.03% to 0.05%), based on the total weight of the alloy. For example, the aluminum alloy material can include 0.01%, 0.02%, 0.03%, 0.04%, 0.05%, 0.06%, 0.07%, 0.08%, 0.09%, or 0.10 % of one or more elements selected from the group consisting of Y, La, Ce, Pr, Nd, Pm, Sm, Eu, Gd, Tb, Dy, Ho, Er, Tm, Yb, and Lu. All are expressed in wt. %.

In some embodiments of any of the foregoing embodiments, the aluminum alloy material includes other minor elements, sometimes referred to as impurities, in amounts of 0.15% or below, 0.14% or below, 0.13% or below, 0.12% or below, 0.11% or below, 0.10% or below, 0.09% or below, 0.08% or below, 0.07% or below, 0.06% or below, 0.05% or below, 0.04% or below, 0.03% or below, 0.02% or below, or 0.01% or below. In some embodiments, these impurities include, but are not limited to, Ga, Ca, Na, or combinations thereof. Accordingly, in some embodiments, one or more elements selected from the group consisting of Ga, Ca, and Na may be present in the aluminum alloy material in amounts of 0.15% or below, 0.14% or below, 0.13% or below, 0.12% or below, 0.11% or below, 0.10% or below, 0.09% or below, 0.08% or below, 0.07% or below, 0.06% or below, 0.05% or below, 0.04% or below, 0.03% or below, 0.02% or below, or 0.01% or below. The sum of all impurities does not exceed 0.15% (e.g., 0.10%). All expressed in wt. %. The remaining percentage of the alloy is aluminum.

The alloy compositions disclosed herein, including the aluminum alloy material of any of foregoing embodiments, have aluminum (Al) as a major component, for example, in an amount of at least 95.0% of the alloy. In some embodiments of any of the foregoing embodiments, the alloy compositions have at least 95.5% Al, at least 96.0% Al, at least 96.5% Al, at least 97.0% Al, at least 97.5% Al, or at least 98.0% Al. All expressed in wt. %.

In this aspect and the various embodiments thereof, the features of the aluminum alloy articles are not necessarily limited by any means of obtaining the features set forth. Even so, the foregoing aspect sets forth various embodiments of methods suitable for preparing aluminum alloy articles having certain of the features set forth herein.

### Methods of Preparins Aluminum Alloy Articles

In certain aspects and embodiments, the aluminum alloy articles disclosed above are products of methods disclosed herein. Without intending to limit the scope of what is set forth herein, certain properties of the aluminum alloy articles disclosed herein are at least partially determined by the formation of certain compositional features during the preparation thereof.

In at least another aspect, the disclosure provides a method of making a surface-modified aluminum alloy article (which is also referred to herein as a treated aluminum alloy article). The method includes the steps of providing an aluminum alloy article having a subsurface portion and a bulk portion, wherein the aluminum alloy article comprises an aluminum alloy material that comprises Mg and Cu as alloying elements; and contacting a surface of the subsurface portion with a surface-modifying composition. The atomic concentration ratio of Cu to Mg in the subsurface portion is from about 0.2 to about 5.0. In some embodiments thereof, the aluminum alloy article is formed by processes that include, among other steps, casting a molten aluminum alloy to form an aluminum alloy cast product, homogenizing the aluminum alloy cast product to form a homogenized aluminum alloy cast product, rolling the homogenized aluminum alloy product to form a rolled aluminum alloy product, and solutionizing the rolled aluminum alloy product to form the aluminum alloy article. Such processing steps, as well as the treating steps, are set forth in further detail below.

Further, the methods disclosed herein use an aluminum alloy material that comprises both Mg and Cu. For this aspect, any suitable such aluminum alloy can be used, including the aluminum alloy compositions set forth in various embodiments of the preceding aspect, which description is incorporated herein by reference.

### Casting

The methods disclosed herein comprise a step of casting a molten aluminum alloy to form an aluminum alloy cast product. In some embodiments, the alloys are cast using a direct chill (DC) casting process to form an aluminum alloy ingot. The resulting ingots can then be scalped. The cast product can then be subjected to further processing steps. In one non-limiting example, the processing method includes homogenizing the aluminum alloy ingot and hot rolling the aluminum alloy ingot to form an aluminum alloy hot band. The aluminum alloy hot band can then be subjected to cold rolling, solution heat treatment, and optionally a pretreatment step.

In some other embodiments, the alloys are cast using a continuous casting (CC) process that may include, but is not limited to, the use of twin-belt casters, twin-roll casters, or block casters. In some embodiments, the casting process is performed by a CC process to form a cast product in the form of a billet, a slab, a shate, a strip, and the like.

In some embodiments of any of the foregoing embodiments, the molten alloy may be treated before casting. The treatment can include one or more of degassing, inline fluxing, and filtering.

The cast product can then be subjected to further processing steps, as described in further detail below. In some embodiments, the processing steps can be used to prepare aluminum alloy sheets. The processing steps can be suitably applied to any cast product, including, but not limited to, ingots, billets, slabs, strips, etc., using modifications and techniques as known to those of skill in the art.

### Homogenization

The homogenization step can include heating an aluminum alloy cast product prepared from an alloy composition described herein to attain a peak metal temperature (PMT) of at least 450 °C (e.g., at least 450 °C, at least 460 °C, at least 470 °C, at least 480 °C, at least 490 °C, at least 500 °C, at least 510 °C, at least 520 °C, at least 530 °C, at least 540 °C, at least 550 °C, at least 560 °C, at least 570 °C, or at least 580 °C). For example, the cast product can be heated to a temperature of from 450 °C to 600 °C, from 500 °C to 590 °C, from 520 °C to 580 °C, from 530 °C to 575 °C, from 535 °C to 570 °C, from 540 °C to 565 °C, from 545 °C to 560 °C, from 530 °C to 560 °C, or from 550 °C to 580 °C. In some embodiments of any of the foregoing embodiments, the heating rate to the PMT is 100 °C/hour or less, 75 °C/hour or less, 50 °C/hour or less, 40 °C/hour or less, 30 °C/hour or less, 25 °C/hour or less, 20 °C/hour or less, or 15 °C/hour or less. In some other such embodiments, the heating rate to the PMT is from 10 °C/min to 100 °C/min (e.g., from 10 °C/min to 90 °C/min, from 10 °C/min to 70 °C/min, from 10 °C/min to 60 °C/min, from 20 °C/min to 90 °C/min, from 30 °C/min to 80 °C/min, from 40 °C/min to 70 °C/min, or from 50 °C/min to 60 °C/min).

In most instances, the aluminum alloy cast product is then allowed to soak (i.e., held at the indicated temperature) for a period of time. In some embodiments, the aluminum alloy cast product is allowed to soak for up to 15 hours (e.g., from 30 minutes to 6 hours, inclusively). For example, in some embodiments, the aluminum alloy cast product is soaked at a temperature of at least 450 °C for 30 minutes, for 1 hour, for 2 hours, for 3 hours, for 4 hours, for 5 hours, for 6 hours, for 7 hours, for 8 hours, for 9 hours, for 10 hours, for 11 hours, for 12 hours, for 13 hours, for 14 hours, for 15 hours, or for any time period in between.

In some embodiments, the homogenization described herein can be carried out in a two-stage homogenization process. In some such embodiments, the homogenization process can include the above-described heating and soaking steps, which can be referred to as the first stage, and can further include a second stage. In the second stage of the homogenization process, the temperature of the aluminum alloy cast product is increased to a temperature higher than the temperature used for the first stage of the homogenization process. The aluminum alloy cast product temperature can be increased, for example, to a temperature at least 5 °C higher than the aluminum alloy cast product temperature during the first stage of the homogenization process. For example, the aluminum alloy cast product temperature can be increased to a temperature of at least 455 °C (e.g., at least 460 °C, at least 465 °C, or at least 470 °C). The heating rate to the second stage homogenization temperature can be 5 °C/hour or less, 3 °C/hour or less, or 2.5 °C/hour or less. The aluminum alloy cast product is then allowed to soak for a period of time during the second stage. In some embodiments, the aluminum alloy cast product is allowed to soak for up to 10 hours (e.g., from 30 minutes to 10 hours, inclusively). For example, the aluminum alloy cast product can be soaked at the temperature of at least 455 °C for 30 minutes, for 1 hour, for 2 hours, for 3 hours, for 4 hours, for 5 hours, for 6 hours, for 7 hours, for 8 hours, for 9 hours, or for 10 hours. In some embodiments, following homogenization, the aluminum alloy cast product is allowed to cool to room temperature in the air.

In some embodiments, homogenization may not be performed, such as in certain continuous casting (CC) methods where such steps may not be necessary.

### Optional Quenching

In some embodiments, the cast product can be quenched prior to hot rolling, particularly in some embodiments where the cast product was formed by continuous casting (CC). In some such embodiments, the homogenization disclosed above may not be performed. Thus, in some embodiments involving CC, after the casting step, the cast product is quenched. In the quenching step, the cast product can be cooled to a temperature at or below about 300 °C. For example, the cast product can be cooled to a temperature at or below 290 °C, at or below 280 °C, at or below 270 °C, at or below 260 °C, at or below 250 °C, at or below 240 °C, at or below 230 °C, at or below 220 °C, at or below 210 °C, at or below 200 °C, at or below 190 °C, at or below 180 °C, at or below 170 °C, at or below 160 °C, at or below 150 °C, at or below 140 °C, at or below 130 °C, at or below 120 °C, at or below 110 °C, at or below 100 °C, at or below 90 °C, at or below 80 °C, at or below 70 °C, at or below 60 °C, at or below 50 °C, or at or below 40 °C (e.g., about 25 °C). The quenching step can be performed using a liquid (e.g., water), a gas (e.g., air), or another selected quench medium.

### Hot Rolling

Following the homogenization step, one or more hot rolling passes may be performed. In certain cases, the aluminum alloy cast products are laid down and hot rolled at a temperature ranging from 250 °C to 550 °C (e.g., from 300 °C to 500 °C, or from 350 °C to 450 °C).

In certain embodiments, the aluminum alloy cast product is hot rolled to a 4 mm to 15 mm thick gauge (e.g., from 4 mm to 15 mm thick gauge), which is referred to as a shate. For example, the aluminum alloy cast product can be hot rolled to a 15 mm thick gauge, a 14 mm thick gauge, a 13 mm thick gauge, a 12 mm thick gauge, a 11 mm thick gauge, a 10 mm thick gauge, a 9 mm thick gauge, a 8 mm thick gauge, a 7 mm thick gauge, a 6 mm thick gauge, a 5 mm thick gauge, or a 4 mm thick gauge.

In certain other embodiments, the aluminum alloy cast product can be hot rolled to a gauge greater than 15 mm thick (e.g., a plate). For example, the aluminum alloy cast product can be hot rolled to a 25 mm thick gauge, a 24 mm thick gauge, a 23 mm thick gauge, a 22 mm thick gauge, a 21 mm thick gauge, a 20 mm thick gauge, a 19 mm thick gauge, a 18 mm thick gauge, a 17 mm thick gauge, or a 16 mm thick gauge.

In other cases, the aluminum alloy cast product can be hot rolled to a gauge no more than 4 mm (i.e., a sheet). In some such embodiments, the aluminum alloy cast product is hot rolled to a 1 mm to 4 mm thick gauge. For example, the aluminum alloy cast product can be hot rolled to a 4 mm thick gauge, a 3 mm thick gauge, a 2 mm thick gauge, or a 1 mm thick gauge.

### Cold Rolling

Following the hot rolling, one or more cold rolling passes may be performed. In certain embodiments, the rolled product from the hot rolling step (e.g., the plate, shate, or sheet) can be cold rolled to a thin-gauge shate or sheet. In some embodiments, this thin-gauge shate or sheet is cold rolled to have a thickness (i.e., a first thickness) ranging from 1.0 mm to 10.0 mm, or from 2.0 mm to 8.0 mm, or from 3.0 mm to 6.0 mm, or from 4.0 mm to 5.0 mm. In some embodiments, this thin-gauge shate or sheet is cold rolled to have a thickness of 12.0 mm, 11.9 mm, 11.8 mm, 11.7 mm, 11.6 mm, 11.5 mm, 11.4 mm, 11.3 mm, 11.2 mm, 11.1 mm, 11.0 mm, 10.9 mm, 10.8 mm, 10.7 mm, 10.6 mm, 10.5 mm, 10.4 mm, 10.3 mm, 10.2 mm, 10.1 mm, 10.0 mm, 9.9 mm, 9.8 mm, 9.7 mm, 9.6 mm, 9.5 mm, 9.4 mm, 9.3 mm, 9.2 mm, 9.1 mm, 9.0 mm, 8.9 mm, 8.8 mm, 8.7 mm, 8.6 mm, 8.5 mm, 8.4 mm, 8.3 mm, 8.2 mm, 8.1 mm, 8.0 mm, 7.9 mm, 7.8 mm, 7.7 mm, 7.6 mm, 7.5 mm, 7.4 mm, 7.3 mm, 7.2 mm, 7.1 mm, 7.0 mm, 6.9 mm, 6.8 mm, 6.7 mm, 6.6 mm, 6.5 mm, 6.4 mm, 6.3 mm, 6.2 mm, 6.1 mm, 6.0 mm, 5.9 mm, 5.8 mm, 5.7 mm, 5.6 mm, 5.5 mm, 5.4 mm, 5.3 mm, 5.2 mm, 5.1 mm, 5.0 mm, 4.9 mm, 4.8 mm, 4.7 mm, 4.6 mm, 4.5 mm, 4.4 mm, 4.3 mm, 4.2 mm, 4.1 mm, 4.0 mm, 3.9 mm, 3.8 mm, 3.7 mm, 3.6 mm, 3.5 mm, 3.4 mm, 3.3 mm, 3.2 mm, 3.1 mm, 3.0 mm, 2.9 mm, 2.8 mm, 2.7 mm, 2.6 mm, 2.5 mm, 2.4 mm, 2.3 mm, 2.2 mm, 2.1 mm, 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.9 mm, 0.8 mm, 0.7 mm, 0.6 mm, 0.5 mm, 0.4 mm, 0.3 mm, 0.2 mm, or 0.1 mm.

In some embodiments, the one or more cold rolling passes reduce the thickness of the rolled aluminum product by at least 30%, at least 35%, at least 40%, at least 45%, at least 50%, at least 55%, at least 60%, at least 65%, or at least 70%. In some embodiments, the one or more cold rolling passes reduces the cast product to a thickness (i.e., a first thickness) of no more than 10 mm, no more than 9 mm, no more than 8 mm, no more than 7 mm, no more than 6 mm, or no more than 5 mm.

### Solutionizing

The cold rolled coil can then be solutionized in a solution heat treatment step to form an aluminum alloy article. The solutionizing can include heating the unwound final gauge aluminum alloy from room temperature to a temperature of from 450 °C to 590 °C (e.g., from 475 °C to 585 °C, from 500 °C to 580 °C, from 515 °C to 575 °C, from 525 °C to 570 °C, from 530 °C to 565 °C, from 535 °C to 560 °C, or from 540 °C to 555 °C). In some examples, the solutionizing is performed at a temperature of 560 °C or below (e.g., from 520 °C to 560 °C). For example, the solutionizing can be performed at a temperature of 450 °C, 455 °C, 460 °C, 465 °C, 470 °C, 475 °C, 480 °C, 485 °C, 490 °C, 495 °C, 500 °C, 505 °C, 510 °C, 515 °C, 520 °C, 525 °C, 530 °C, 535 °C, 540 °C, 545 °C, 550 °C, 555 °C, or 560 °C.

The final gauge aluminum alloy can soak at the solutionizing temperature for a period of time. In certain aspects, the final gauge aluminum alloy is allowed to soak for up to approximately 5 hours (e.g., from about 1 second to about 5 hours, inclusively). For example, the cold rolled coil can be soaked at the solutionizing temperature of from 525 °C to 590 °C for 1 second, 5 seconds, 10 seconds, 15 seconds, 20 seconds, 25 seconds, 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, 125 seconds, 130 seconds, 135 seconds, 140 seconds, 145 seconds, 150 seconds, 5 minutes, 10 minutes, 15 minutes, 20 minutes, 25 minutes, 30 minutes, 35 minutes, 40 minutes, 45 minutes, 50 minutes, 55 minutes, 1 hour, 2 hours, 3 hours, 4 hours, 5 hours, or anywhere in between.

In some embodiments, a shorter soaking duration is desirable. For example, the cold rolled coil can be allowed to soak for about 30 seconds or less (e.g., 25 seconds or less, 20 seconds or less, 15 seconds or less, 10 seconds or less, 5 seconds or less, or 1 second).

### Quenching

In certain embodiments, the aluminum alloy article is then cooled to a temperature of about 30 °C at a quench speed that can vary between 50 °C/s to 400 °C/s in a quenching step that is based on the selected gauge. For example, the quench rate can be from 50 °C/s to 375 °C/s, from 60 °C/s to 375 °C/s, from 70 °C/s to 350 °C/s, from 80 °C/s to 325 °C/s, from 90 °C/s to 300 °C/s, from 100 °C/s to 275 °C/s, from 125 °C/s to 250 °C/s, from 150 °C/s to 225 °C/s, or from 175 °C/s to 200 °C/s.

In the quenching step, the aluminum alloy article is quenched with a liquid (e.g., water) and/or gas or another selected quench medium. In certain aspects, the aluminum alloy article can be air quenched. The aluminum alloy article can optionally undergo certain treating steps, as further described below.

### Surface Modification

The methods disclosed herein include the step(s) of treating the rolled surface to form a treated aluminum alloy article, wherein the treating comprises contacting the rolled surface with a treatment composition. In general, the surface treating processes set forth herein play a role in the Mg depletion and/or Cu enrichment of the aluminum alloy article, as described above.

With reference to the treating and other steps of the methods, reference is made to a "subsurface portion" and a "bulk portion." Those terms have the same meanings as set forth above in the description of the aspect relating to the aluminum alloy articles, including any embodiments and combinations of embodiments thereof, which description is hereby incorporated by reference into this discussion of the methods.

In some embodiments, the treating comprises cleaning the surface with an alkaline cleaning composition. Such cleaning removes residual oils or certain adhering oxides (e.g., MgO) from the surface. In some embodiments, the cleaning composition is an alkaline solution having a pH of 7.5 or above. In some further such embodiments, the pH of the alkaline solution can be about 8, about 8.5, about 9, about 9.5, about 10, about 10.5, about 11, about 11.5, about 12, about 12.5, or about 13. In some such embodiments, the concentration of the alkaline agent ranges from 1 % to 10 % (e.g., 1 %, 2 %, 3 %, 4 %, 5 %, 6 %, 7 %, 8 %, 9 %, or 10 %, based on the volume of the alkaline solution). Suitable alkaline agents include, for example, hydroxides (e.g., sodium hydroxide, potassium hydroxide, ammonium hydroxide, and the like). The alkaline solution can further include one or more surfactants, including anionic and non-ionic surfactants. In some embodiments, the alkaline solution does not include a strong oxidizing agent, or has a very low concentration of a strong oxidizing agent (e.g., a concentration of no more than 1000 ppm, no more than 500 ppm, no more than 300 ppm, no more than 100 ppm, no more than 50 ppm, no more than 25 ppm, or no more than 10 ppm). The alkaline wash can be performed using, for example, spray impingement which can remove Mg, in the form of MgO, from the surface. Further, in some embodiments, the alkaline wash can be followed by spraying the washed surface with water or an aqueous medium under high pressure. The post-wash spray can serve to remove oxidized Mg (e.g., as MgO) from the surface of the aluminum alloy article.

The pretreatment process described herein can also include a step of etching the surface of the aluminum alloy article. The surface of the aluminum alloy article can be etched using a chemical etch such as an acid etch (i.e., an etching procedure that includes an acid solution having a pH of less than 7), an alkaline etch (i.e., an etching procedure that includes a basic solution having a pH of greater than 7), or an etch under neutral conditions (i.e., an etching procedure that includes a neutral solution having a pH of 7). The chemical etch prepares the surface to accept the subsequent application of a pretreatment. Any loosely adhering oxides, such as Al oxides and Mg rich oxides, entrapped oils, or debris, can be adequately removed during this step. Exemplary chemicals for performing the acid etch include sulfuric acid, hydrofluoric acid, nitric acid, phosphoric acid, and combinations of these. Exemplary chemicals for performing the alkaline etch include sodium hydroxide and potassium hydroxide. After the acid etching step, the surface of the aluminum alloy article can be rinsed with an aqueous or organic solvent.

Further, in some embodiments, the treating includes carrying out both an acid etch and an alkaline wash, according to any of the foregoing embodiments for each process. In some such embodiments, the acid etch precedes the alkaline wash.

As noted above, the treatment step(s) selectively remove Mg from the surface portion of the aluminum alloy article relative to Cu. In some such embodiments, the treating reduces the atomic concentration of Mg in the surface portion by at least 5%, at least 10%, at least 15%, at least 20%, at least 25%, at least 30%, at least 35%, or at least 40%, i.e., based on the initial atomic concentration of Mg present in the surface portion. It should be noted that Mg in its oxidized form, e.g., as MgO, contributes to the atomic concentration of Mg. In some further such embodiments, the treating reduces the atomic concentration of Cu in the surface portion by no more than 10%, no more than 9%, no more than 8%, no more than 7%, no more than 6%, no more than 5%, no more than 4%, no more than 3%, no more than 2%, or no more than 1%, i.e., based on the initial atomic concentration of Cu present in the surface portion.

### Pretreatment

A pretreatment can then be applied to the surface of the aluminum alloy article. Optionally, the pretreatment can include an adhesion promoter, a corrosion inhibitor, a coupling agent, an antimicrobial agent, or a mixture thereof. It should be noted that the surface application processes disclosed immediately above can be used in combination with the pretreatment processes in any suitable combination. For example, in some embodiments, the surface of an aluminum alloy article is contacted with an acidic etchant composition, and, then, is contacted with a pretreatment, such as an adhesion promoter. In some other embodiments, an aluminum alloy article is contacted with an alkaline composition followed by strong spray with water, and, then, is contacted with a pretreatment, such as an adhesion promoter. In some further embodiments, the surface of an aluminum alloy article is contacted with an acidic etchant composition, and, then, is contacted with an alkaline composition followed by strong spray with water, and, then, is contacted with a pretreatment, such as an adhesion promoter. In some other embodiments, the surface of an aluminum alloy article is contacted with an alkaline composition followed by strong spray with water, and, then, is contacted with an acidic etchant composition, and, then, is contacted with a pretreatment, such as an adhesion promoter.

### Rinsing and Drying after Pretreatment

After the application of the pretreatment, the surface of the aluminum alloy article optionally can be rinsed with a solvent (e.g., an aqueous or an organic solvent). The surface of the aluminum alloy article can be dried after the rinsing step.

### Finishing

Following the treating step(s) and any optional additional treatment, the aluminum alloy article can be finished to have a final temper. In some embodiments, the final temper is an O temper, an F temper, or any temper ranging from T1 to T9. In some further such embodiments, the final temper is an F temper, a T4 temper, a T6 temper, or a T8x temper.

In one or more further aspects, the disclosure provides aluminum alloy articles formed by the processes set forth above, or any embodiments thereof.

### Articles of Manufacture

In at least another aspect, the disclosure provides an article of manufacture, which is comprised of an aluminum alloy article of the any of the aforementioned aspects, or any embodiments thereof. In some embodiments, the article of manufacture comprises a rolled aluminum alloy sheet. Examples of such articles of manufacture include, but are not limited to, an automobile, a truck, a trailer, a train, a railroad car, an airplane, a body panel or part for any of the foregoing, a bridge, a pipeline, a pipe, a tubing, a boat, a ship, a storage container, a storage tank, an article of furniture, a window, a door, a railing, a functional or decorative architectural piece, a pipe railing, an electrical component, a conduit, a beverage container, a food container, or a foil.

In some other embodiments, the aluminum alloy articles disclosed herein can be used in automotive and/or transportation applications, including motor vehicle, aircraft, and railway applications, or any other desired application. In some examples, the aluminum alloy articles disclosed herein can be used to prepare motor vehicle body part products, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloys and methods described herein can also be used in aircraft or railway vehicle applications, to prepare, for example, external and internal panels.

In some other embodiments, the aluminum alloy articles disclosed herein can be used in electronics applications. For example, the aluminum alloy articles disclosed herein can also be used to prepare housings for electronic devices, including mobile phones and tablet computers. In some examples, the alloys can be used to prepare housings for the outer casing of mobile phones (e.g., smart phones) and tablet bottom chassis.

In some other embodiments, the aluminum alloy articles disclosed herein can be used in industrial applications. For example, the aluminum alloy articles disclosed herein can be used to prepare products for the general distribution market.

In some other embodiments, the aluminum alloy articles disclosed herein can be used as aerospace body parts. For example, the aluminum alloy articles disclosed herein can be used to prepare structural aerospace body parts, such as a wing, a fuselage, an aileron, a rudder, an elevator, a cowling, or a support. In some other embodiments, the aluminum alloy articles disclosed herein can be used to prepare non-structural aerospace body parts, such as a seat track, a seat frame, a panel, or a hinge.

### Bonded Articles of Manufacture

In at least another aspect, the disclosure provides a bonded article of manufacture, comprising a first aluminum alloy article as described herein and a second metal or alloy; wherein a surface of the first aluminum alloy article and a surface of the second metal or alloy article are bonded together. In some cases, one or both of the first aluminum alloy article and the second metal or alloy article are an aluminum alloy article of the first or third aspects, or any embodiments thereof. Optionally, the second metal or alloy article comprises steel (e.g., galvanized steel) or a composite material, such as a carbon composite. In some embodiments, the surfaces of the first aluminum alloy article and of the second metal or alloy article are bonded together by adhesive bonding using, for example, an adhesive composition, such as an epoxy resin. In some other embodiments, the surfaces of the first aluminum alloy article and of the second metal or alloy article are bonded together by a weld using, for example, a welding composition.

Examples of such bonded articles of manufacture include, but are not limited to, an automobile, a truck, a trailer, a train, a railroad car, an airplane, a body panel or part for any of the foregoing, a bridge, a pipeline, a pipe, a tubing, a boat, a ship, a storage container, a storage tank, an article of furniture, a window, a door, a railing, a functional or decorative architectural piece, a pipe railing, an electrical component, a conduit, a beverage container, a food container, or a foil.

In some other embodiments, the aluminum alloy articles disclosed herein can be bonded as described above and used in automotive and/or transportation applications, including motor vehicle, aircraft, and railway applications, or any other desired application. In some examples, the aluminum alloy articles disclosed herein can be used to prepare motor vehicle body part products, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloys and methods described herein can also be used in aircraft or railway vehicle applications, to prepare, for example, external and internal panels.

In some other embodiments, the aluminum alloy articles disclosed herein can be bonded as described above and used in electronics applications. For example, the aluminum alloy articles disclosed herein can also be used to prepare housings for electronic devices, including mobile phones and tablet computers. In some examples, the alloys can be used to prepare housings for the outer casing of mobile phones (e.g., smart phones) and tablet bottom chassis.

In some other embodiments, the aluminum alloy articles disclosed herein can be bonded as described above and used in industrial applications. For example, the aluminum alloy articles disclosed herein can be used to prepare products for the general distribution market.

In some other embodiments, the aluminum alloy articles disclosed herein can be bonded as described above and used as aerospace body parts. For example, the aluminum alloy articles disclosed herein can be used to prepare structural aerospace body parts, such as a wing, a fuselage, an aileron, a rudder, an elevator, a cowling, or a support. In some other embodiments, the aluminum alloy articles disclosed herein can be used to prepare non-structural aerospace body parts, such as a seat track, a seat frame, a panel, or a hinge.

### Methods of Bonding Aluminum Alloy Articles

In at least another aspect, the disclosure provides a method of bonding aluminum alloy articles, the method comprising: providing a first aluminum alloy article having a surface and a second metal or alloy article having a surface, wherein one or both of the first aluminum alloy article and the second metal or alloy article are an aluminum alloy article of the first or third aspects, or any embodiments thereof; and bonding the surface of the first aluminum alloy article and the surface of the second metal or alloy article. In some embodiments, the bonding comprises adhesive bonding, for example, with an adhesive composition, such as an epoxy resin. In some other embodiments, the bonding comprises welding.

### EXAMPLES

### EXAMPLE 1 - Alloy Composition

An aluminum alloy was prepared, whose elemental composition is set forth in Table 3 below. The elemental compositions are provided in weight percentages.

**Table 3**

| **Alloy** | **Si** | **Mg** | **Cu** | **Fe** | **Mn** | **Ti** | **Cr** | **Al** |
|---|---|---|---|---|---|---|---|---|
| A1 | 0.8 | 0.65 | 0.1 | 0.25 | 0.08 | 0.05 | 0.08 | bal. |

| | | | | | | | | |
|---|---|---|---|---|---|---|---|---|
| Nominal value; all expressed in wt. %. | | | | | | | | |

### EXAMPLE 2 - Manufacture and Treatment of Aluminum Alloy Sheet

Alloy A1 (Table 3) was direct chill casted, homogenized, and hot rolled according to methods as described herein. The rolled sheet was then cooled, coiled, and subjected to batch annealing (heating to 375 °C to 425 °C and soaked for at least an hour). The annealed rolls were cooled, and the sheet was further rolled using cold rolling to reach a final gauge of 1.5 mm. Six different samples were prepared from Alloy A1. The samples are differentiated by: (a) the method of hot rolling and (b) what combination and order of surface treatments were applied following cold rolling (from among alkaline washing, acid etching, and pretreatment application).

When used, the alkaline washing was carried out by suitable methods, described in detail above, followed by strong wash with water. When used, the acid etching was carried out by suitable methods, described in detail above. When used, the pretreatment was carried out by suitable methods, described in detail above.

Samples treated in these different ways are identified as B 1-B6, and are shown in Table 4 below.

**Table 4**

| **Sample** | **Alkaline Washing** | **Acid Etching** | **Pretreatment** |
|---|---|---|---|
| B1 | - | Step 1 | Step 2 |
| B2 | Step 2 | Step 1 | Step 3 |
| B3 | Step 1 | Step 2 | Step 3 |
| B4 | - | Step 1 | Step 2 |
| B5 | Step 2 | Step 1 | Step 3 |
| B6 | Step 1 | Step 2 | Step 3 |

### EXAMPLE 3 - Bond Durability testing

Each of the six samples from Example 2 (Samples B1 to B6) were subjected to bond durability (BD) testing. In the BD test, a set of 6 lap joints (bonds) were connected in sequence by bolts and positioned vertically in a 90% ± 5% relative humidity (RH) humidity cabinet. The temperature was maintained at 50 °C ± 2 °C. A force load of 2.4 kN was applied to the bond sequence. The BD test is a cyclic exposure test that is conducted for up to 45 cycles. Each cycle lasts for 24 hours. In each cycle, the bonds are exposed in the humidity cabinet for 22 hours, then immersed in 5% NaCl for 15 minutes, and finally air-dried for 105 minutes. Upon the breaking of three joints, the test is discontinued for the particular set of joints and is indicated as a first failure. The number "45" in a cell indicates that the joints remained intact for 45 cycles without failure. Table 5 reports the mean number of BD cycles to failure for the six joints, the standard deviation among the six joints, and the number of cycles of earliest failure. A value of "45" indicates that the sample did not fail at any point during the testing.

**Table 5**

| **Sample** | **Mean** | **St. Dev** | **First Fail** |
|---|---|---|---|
| B1 | 45 | 6 | 32 |
| B2 | 45 | 0 | 45 |
| B3 | 25 | 0 | 25 |
| B4 | 33 | 10 | 16 |
| B5 | 45 | 0 | 45 |
| B6 | 23 | 0 | 23 |

### EXAMPLE 4 - Atomic Concentrations of Cu and Mg

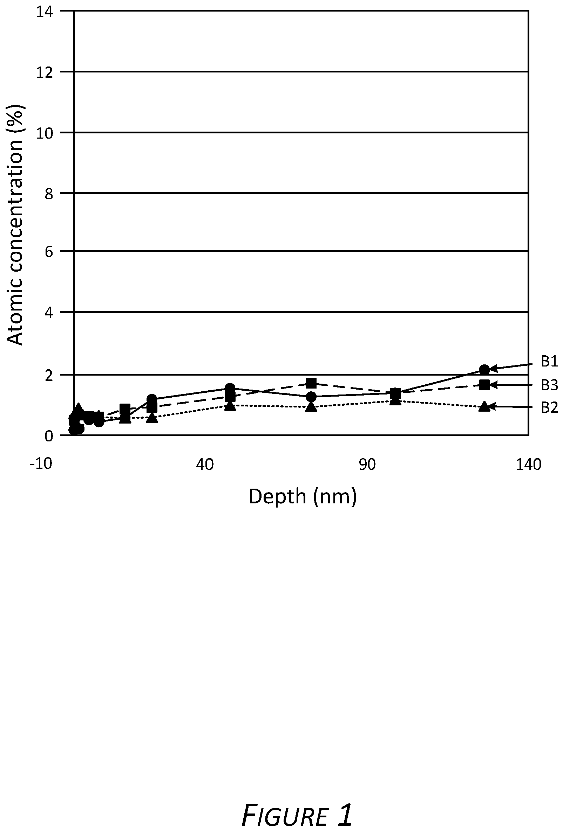

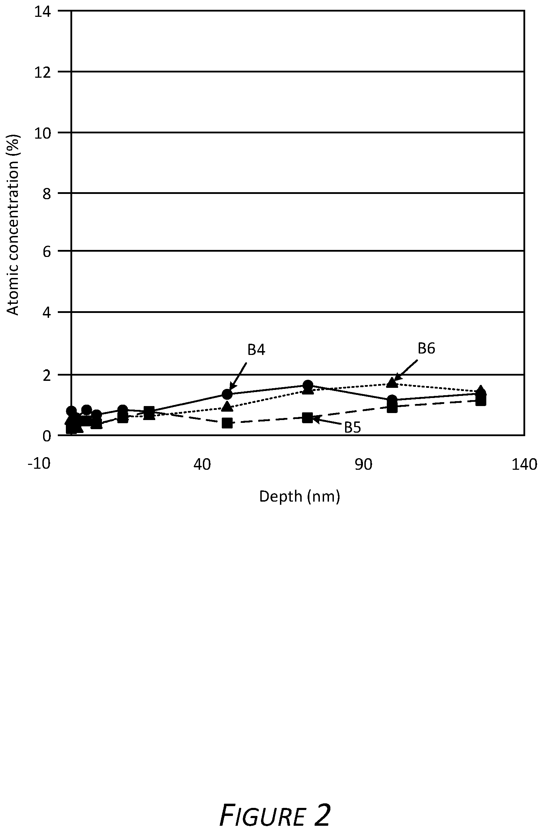

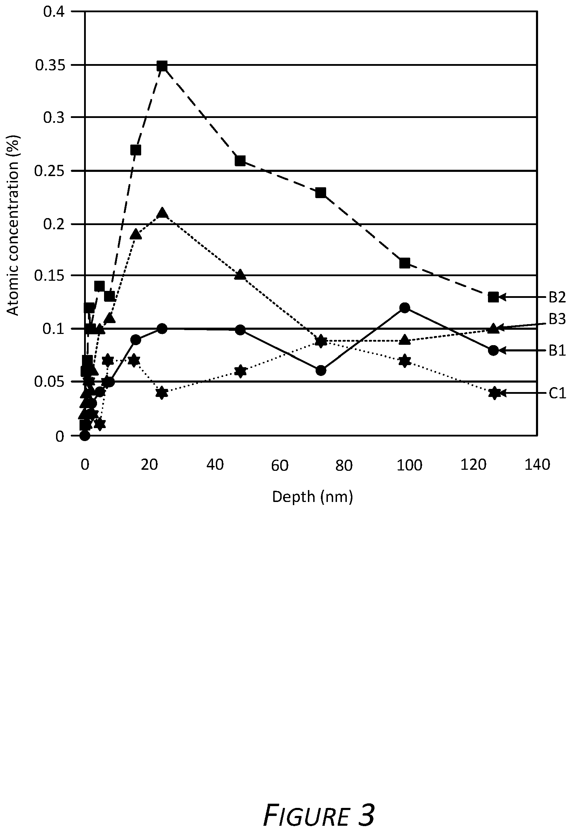

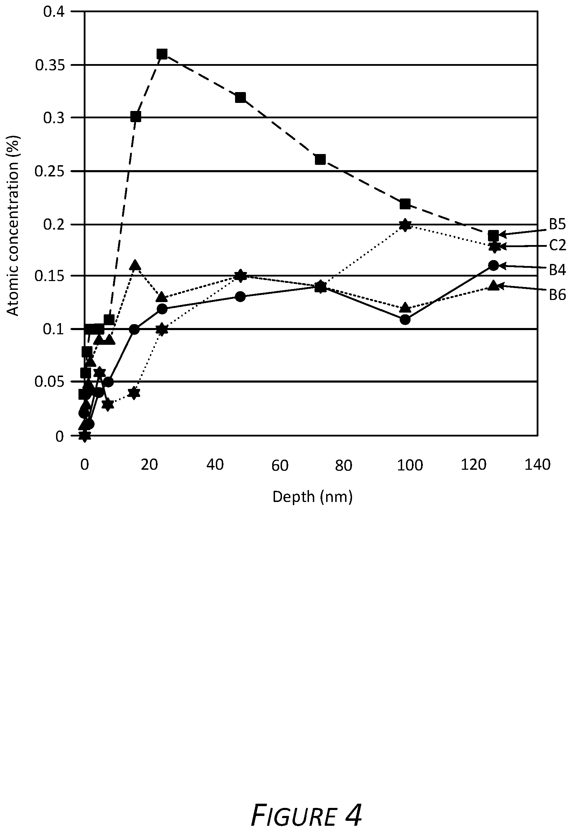

Using XPS, the atomic concentrations of Cu and Mg were measured for each of the six samples of Example 2 (Samples B 1 to B6). The atomic concentrations of Cu and Mg were measured at different depths from the surface to a depth of 125 nm from the surface. Figure 1 shows the atomic concentration of Mg in a test sample at depths up to 125 nm for B 1, B2, and B3, as recorded by XPS. Figure 2 shows the atomic concentration of Mg in a test sample at depths up to 125 nm for B4, B5, and B6, as recorded by XPS. Figure 3 shows the atomic concentration of Cu in a test sample at depths up to 125 nm for B 1, B2, and B3, as recorded by XPS. Figure 3 also shows a comparison to a comparable article (C1) that did not undergo any of the surface-modifying treatments set forth in Example 2. Figure 4 shows the atomic concentration of Cu in a test sample at depths up to 125 nm for B4, B5, and B6, as recorded by XPS. Figure 4 also shows a comparison to a comparable article (C2) that did not undergo any of the surface-modifying treatments set forth in Example 2.

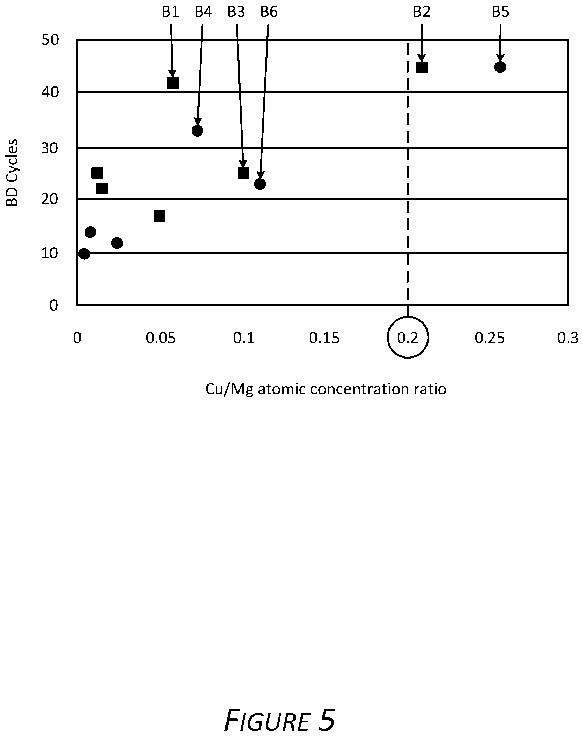

Table 6 shows the ratio of the atomic concentrations of Cu to Mg within the outermost 125 nm of material (referred to as "Cu/Mg" in Table 6) for each of the six samples of Example 2 (Sampled B1 to B6). Figure 5 shows a plot of the mean number of BD cycles passed for each sample as a function of the atomic concentration ratio of Cu to Mg for each sample. Note from the data in Tables 5 and 6 and Figure 5 that, when the atomic concentration ratio of Cu to Mg is about 0.2 or more in the subsurface portion, superior bond durability is achieved.

**Table 6**

| **Sample** | **Cu/Mg** |
|---|---|
| B1 | 0.057 |
| B2 | 0.208 |
| B3 | 0.100 |
| B4 | 0.072 |
| B5 | 0.256 |
| B6 | 0.110 |

### EXAMPLE 5 - Bond Durability with Oxidized Cu (not according to the invention)

An AA7xxx series aluminum alloy was prepared by direct chill casting and was processed by homogenizing, hot rolling, cold rolling, solution heat treating, air quenching, aging, and etching using an etch solution containing various etchants. The alloy was in a T6 temper. Etch parameters are presented in Table 7 below.

**Table 7**

| **Etch Reference** | **Etch Solution** | **Dwell Time (s)** | **Temperature (°C)** |
|---|---|---|---|
| 1 | 7% H₂SO₄/Fe₂(SO₄)₃ | 5 | 67 |
| 2 | H₃PO₄/H₂SO₄ | 60 | 105 |
| 3 | H₃PO₄/H₂SO₄ | 5 | 105 |
| 4 | (1) Kleen 4005 followed by (2) 7% H₂SO₄/Fe₂(SO₄)₃ | (1) 3 and (2) 5 | (1) 65 and (2) 67 |
| 5 | (1) 7% H₂SO₄/Fe₂(SO₄)₃ (2) Kleen 4005 | (1) 5 and (2) 3 | (1) 67 and (2) 65 |
| 6 | Kleen 4005 | 3 | 65 |
| 7 | H₃PO₄/H₂SO₄/HNO₃ | 60 | 105 |
| 8 | H₃PO₄/H₂SO₄/HNO₃ | 5 | 105 |
| 9 | Electrolytic (80% H₃PO₄ and 20% EtOH) | N/A | N/A |

Bond durability testing was performed on the aluminum alloy articles etched according to the conditions shown in Table 7. The prepared samples were bonded together and subjected to a stress durability test. In the stress durability test, a set of 6 lap joints/bonds were connected in sequence by bolts and positioned vertically in a 90% relative humidity (RH) humidity cabinet. The temperature was maintained at 50 °C. A force load of 2.4 kN was applied to the bond sequence. The stress durability test is a cyclic exposure test that is conducted for up to 45 cycles. Each cycle lasted for 24 hours. In each cycle, the bonds were exposed in the humidity cabinet for 22 hours, then immersed in a 5% aqueous sodium chloride (NaCl) solution for 15 minutes, and finally air-dried for 105 minutes. Upon the breaking of three joints, the test was discontinued for the particular set of joints and indicated as a first failure. For this experiment, the completion of 45 cycles indicates that the set of joints passed the bond durability test. The test results are shown below in Table 8. In Table 8, each of the joints are numbered 1 through 6, where joint 1 is the top joint and joint 6 is the bottom joint when oriented vertically. The number in the cells, except for "45," indicates the number of successful cycles before a break. The number "45" in a cell indicates that the joints remained intact for 45 cycles without failure. The results are summarized in Table 8 below:

**Table 8**

| **Etch Reference** | **1-Top** | **2** | **3** | **4** | **5** | **6-Bottom** | **Mean** | **Std. Dev.** |
|---|---|---|---|---|---|---|---|---|
| 1 | 10 | 16 | 15 | 13 | 16 | 16 | 14 | 2 |
| 2 | N/A | 15 | 11 | 19 | 10 | N/A | 14 | 4 |
| 3 | N/A | 3 | 10 | 10 | 3 | N/A | 7 | 4 |
| 4 | 10 | 5 | 10 | 10 | 10 | 7 | 9 | 2 |
| 5 | 10 | 10 | 10 | 2 | 3 | 3 | 6 | 4 |
| 6 | 10 | 11 | 14 | 10 | 14 | 14 | 12 | 2 |
| 7 | N/A | 27 | 34 | 31 | 45 | N/A | 33 | 6 |
| 8 | N/A | 19 | 19 | 19 | 19 | N/A | 19 | 0 |
| 9 | N/A | 10 | 16 | 18 | 15 | N/A | 15 | 3 |

Alloys etched according to the procedure in Etch References 1, 6, and 9 were performed as comparative samples using commercially available etchants that do not contain oxidizers. As evident in Table 8, the alloys etched according to the procedure in Etch References 1, 6, and 9 exhibited poor bond durability. Additionally, alloys etched according to the procedure in Etch References 4 and 5 were performed as comparative samples using commercially available etchants without oxidizers in a two-step procedure. As evident in Table 8, the alloys etched according to the procedure in Etch References 4 and 5 exhibited poor bond durability. The alloys etched according to the procedure in Etch References 2 and 3 were performed as comparative samples using an etchant without oxidizers. As evident in Table 8, the alloys etched according to the procedure in Etch References 2 and 3 exhibited poor bond durability. The alloys etched according to the procedure in Etch References 7 and 8 were performed according to the methods described herein, using an exemplary etchant containing an oxidizer (e.g., nitric acid (HNO₃). As evident in Table 8, the alloy etched according to the procedure in Etch Reference 7 (i.e., including an oxidizer and at an appropriate temperature for an appropriate time) exhibited superior bond durability. However, the alloy etched using an oxidizer but for a dwell time of 5 seconds (i.e., according to the procedure in Etch Reference 8) did not result in the desired bond durability results.

### EXAMPLE 6 - Surface Characteristics (not according to the invention)

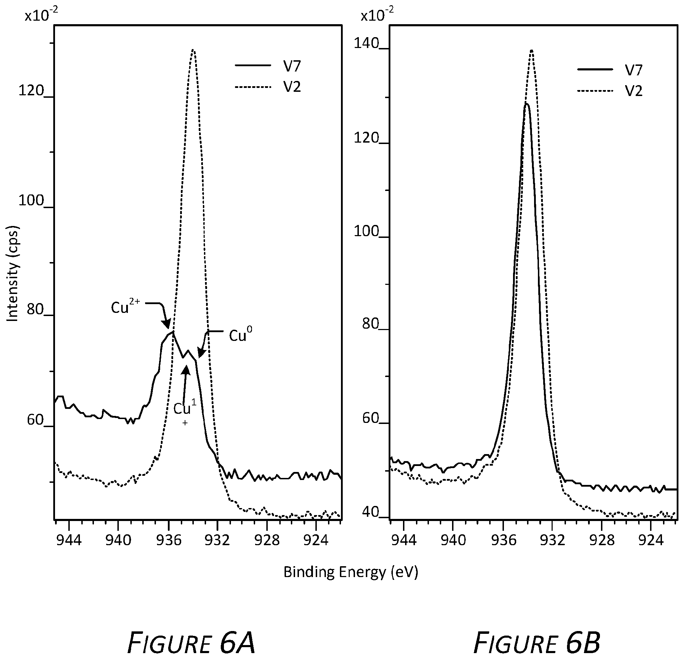

Surfaces of the aluminum alloy sheets were analyzed by X-ray photon spectroscopy (XPS). Amounts of copper metal and copper oxide were analyzed. Measurements were conducted on the surface as etched and pretreated, and after sputtering for 10 seconds. Figure 6A shows data for the copper oxide content present at the surface of the alloy. Figure 6B shows data for the copper oxide content present at the surface of the alloy after the 10 second sputtering procedure to remove oxidized species (e.g., copper oxide) at the surface of the alloy. In Figures 6A and 6B, the alloys etched with a comparative etching procedure (see Table 8, Etch Reference 2), where the etchant did not contain an oxidizer, did not exhibit any copper oxide (see plot V2 in Figures 6A and 6B), but did exhibit presence of copper metal, indicated by the strong peak at *ca.* 933 eV. The alloys etched with the etchant containing an oxidizer (e.g., HNO₃, see Table 8, Etch Reference 7) exhibited copper oxide present at the surface of the alloy (see Figure 6A, plot V7) in an as-etched condition, as indicated by the peaks at *ca.* 934, 935, and 937 eV. Additionally, sputtering the sample of the V7 plot exhibited removal of the copper oxide at the surface of the alloy, indicating copper oxide was present at the surface as a result of etching with an oxidizer, and copper oxide was not present in the subsurface of the alloy and merely exposed by the etching procedure. Controlled oxidation of copper at the surface of the aluminum alloy can be desirable for bonding and joining applications. Further, observed oxidation of species at the surface of an aluminum alloy indicates the aluminum alloy can have superior bond durability.

## Claims

1. An aluminum alloy article, comprising an aluminum alloy material that comprises:
from 0.2 to 1.4 wt. % Si;
from 0.4 to 5.0 wt. % Mg;
from 0.01 to 2.0 wt. % Cu;
from 0.05 to 0.50 wt. % Fe;
up to 0.25 wt. % Mn;
up to 0.25 wt. % Cr;
up to 0.15 wt. % Zn;
up to 0.20 wt. % Ti;
up to 0.05 wt. % Zr;
up to 0.05 wt. % Pb;
optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and
up to 0.15 wt. % impurities;
with the remainder being Al;
wherein the aluminum alloy article comprises a subsurface portion and a bulk portion,
wherein the subsurface portion extends from an external surface of the aluminum alloy article to a depth of up to 5 µm,
wherein the subsurface portion of the aluminum alloy article has a higher concentration of Cu as compared to the bulk portion, and
wherein an atomic concentration ratio of Cu to Mg in the subsurface portion is from about 0.2 to about 5.0.

2. The aluminum alloy article of claim 1, wherein the aluminum alloy material comprises:
from 0.6 to 0.95 wt. % Si;
from 0.55 to 0.75 wt. % Mg;
from 0.05 to 0.60 wt. % Cu;
from 0.20 to 0.35 wt. % Fe;
from 0.05 to 0.20 wt. % Mn;
up to 0.15 wt. % Cr;
up to 0.15 wt. % Zn;
up to 0.15 wt. % Ti;
up to 0.05 wt. % Zr;
up to 0.05 wt. % Pb;
optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and
up to 0.15 wt. % impurities;
with the remainder being Al.

3. The aluminum alloy article of any one of claims 1 to 2, wherein the aluminum alloy article is a rolled aluminum alloy shate or a rolled aluminum alloy sheet, wherein the aluminum alloy article has a thickness of no more than 15 mm, or no more than 14 mm, or no more than 13 mm, or no more than 12 mm, or no more than 11 mm, or no more than 10 mm, or no more than 9 mm, or no more than 8 mm, or no more than 7 mm, or no more than 6 mm, or no more than 5 mm, or no more than 4 mm, or no more than 3 mm, or no more than 2 mm, or no more than 1 mm, or no more than 0.5 mm, or no more than 0.3 mm, or no more than 0.1 mm.

4. The aluminum alloy article of any one of claims 1 to 3, wherein the atomic concentration ratio of Cu to Mg in the aluminum alloy material of the subsurface portion is at least 20%, or at least 40%, or at least 60%, or at least 80%, or at least 100%, or at least 150%, or at least 200%, greater than the atomic concentration ratio of Cu to Mg in the aluminum alloy material of the bulk portion, based on the atomic concentration ratio of Cu to Mg in the aluminum alloy material of the bulk portion.

5. The aluminum alloy article of any one of claims 1 to 4, wherein the atomic concentration ratio of Cu to Mg in the aluminum alloy material of the subsurface portion is at least 20%, or at least 40%, or at least 60%, or at least 80%, or at least 100%, or at least 150%, or at least 200%, greater than an atomic concentration ratio of Cu to Mg in the aluminum alloy material of a subsurface portion of an untreated aluminum alloy material.

6. The aluminum alloy article of any one of claims 1 to 5, wherein the atomic concentration ratio of Cu to Mg in the aluminum alloy material of the subsurface portion ranges from 0.2 to 4.5, or from 0.2 to 4.0, or from 0.2 to 3.5, or from 0.2 to 3.0, or from 0.2 to 2.5, or from 0.2 to 2.0, or from 0.2 to 1.5, or from 0.2 to 1.0, or from 0.2 to 0.5.

7. A method of making a surface-modified aluminum alloy article, the method comprising:
providing an aluminum alloy article having a subsurface portion and a bulk portion, wherein the aluminum alloy article comprises an aluminum alloy material that comprises:
from 0.2 to 1.4 wt. % Si;
from 0.4 to 5.0 wt. % Mg;
from 0.01 to 2.0 wt. % Cu;
from 0.05 to 0.50 wt. % Fe;
up to 0.25 wt. % Mn;
up to 0.25 wt. % Cr;
up to 0.15 wt. % Zn;
up to 0.20 wt. % Ti;
up to 0.05 wt. % Zr;
up to 0.05 wt. % Pb;
optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and
up to 0.15 wt. % impurities;
with the remainder being Al; and
contacting a surface of the subsurface portion with a surface-modifying composition, wherein the treating includes carrying out an acid etch and an alkaline wash, whereby the acid etch precedes the alkaline wash;
wherein the subsurface portion of the treated aluminum alloy article has a higher concentration of Cu as compared to the bulk portion,
wherein the subsurface portion extends from an external surface of the aluminum alloy article to a depth of up to 5 µm, and
wherein an atomic concentration ratio of Cu to Mg in the subsurface portion is from about 0.2 to about 5.0.

8. The method of claim 7, wherein the providing comprises:
casting a molten aluminum alloy to form an aluminum alloy cast product;
optionally homogenizing the aluminum alloy cast product to form a homogenized aluminum alloy cast product;
rolling the homogenized aluminum alloy cast product or the aluminum alloy cast product to form a rolled aluminum alloy product; and
solutionizing the rolled aluminum alloy product to form the aluminum alloy article.

9. The method of claim 7 or 8, wherein the aluminum alloy material comprises:
from 0.6 to 0.95 wt. % Si;
from 0.55 to 0.75 wt. % Mg;
from 0.05 to 0.60 wt. % Cu;
from 0.20 to 0.35 wt. % Fe;
from 0.05 to 0.20 wt. % Mn;
up to 0.15 wt. % Cr;
up to 0.15 wt. % Zn;
up to 0.15 wt. % Ti;
up to 0.05 wt. % Zr;
up to 0.05 wt. % Pb;
optionally further comprising up to 0.10 wt. % of one or more elements selected from the group consisting of Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb, and Lu; and
up to 0.15 wt. % impurities;
with the remainder being Al.

10. The method of any one of claims 7 to 9, wherein the aluminum alloy article has a thickness of no more than 15 mm, or no more than 14 mm, or no more than 13 mm, or no more than 12 mm, or no more than 11 mm, or no more than 10 mm, or no more than 9 mm, or no more than 8 mm, or no more than 7 mm, or no more than 6 mm, or no more than 5 mm, or no more than 4 mm, or no more than 3 mm, or no more than 2 mm, or no more than 1 mm, or no more than 0.5 mm, or no more than 0.3 mm, or no more than 0.1 mm.

11. The method of any one of claims 7 to 10, wherein the alkaline solution for the alkaline wash comprises a strong oxidizing agent at a concentration of no more than 500 ppm, or no more than 300 ppm, or no more than 100 ppm, or no more than 50 ppm, or no more than 25 ppm, or no more than 10 ppm.

12. An aluminum alloy article, wherein the aluminum alloy article is the surface-modified aluminum alloy article formed by the method of any one of claims 7 to 11.

13. An aluminum alloy article of claim 12, wherein the aluminum alloy article is an automobile, a truck, a trailer, a train, a railroad car, an airplane, a body panel or part for any of the foregoing, a bridge, a pipeline, a pipe, a tubing, a boat, a ship, a storage container, a storage tank, a an article of furniture, a window, a door, a railing, a functional or decorative architectural piece, a pipe railing, an electrical component, a conduit, a beverage container, a food container, or a foil.

## Patentansprüche

1. Aluminiumlegierungsartikel, der ein Aluminiumlegierungsmaterial umfasst, das umfasst:
0,2 bis 1,4 Gew.-% Si;
0,4 bis 5,0 Gew.-% Mg;
0,01 bis 2,0 Gew.-% Cu;
0,05 bis 0,50 Gew.-% Fe;
bis zu 0,25 Gew.-% Mn;
bis zu 0,25 Gew.-% Cr;
bis zu 0,15 Gew.-% Zn;
bis zu 0,20 Gew.-% Ti;
bis zu 0,05 Gew.-% Zr;
bis zu 0,05 Gew.-% Pb;
gegebenenfalls ferner umfassend bis zu 0,10 Gew.-% eines oder mehrerer Elemente ausgewählt aus der Gruppe bestehend aus Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb und Lu; und
bis zu 0,15 Gew.-% Verunreinigungen;
wobei der Rest Al ist;
wobei der Aluminiumlegierungsartikel einen Abschnitt unter der Oberfläche und einen Bulkabschnitt umfasst,
wobei sich der Abschnitt unter der Oberfläche von einer äußeren Oberfläche des Aluminiumlegierungsartikels bis zu einer Teife von bis zu 5 µm erstreckt,
wobei der Abschnitt unter der Oberfläche des Aluminiumlegierungsartikels eine höhere Konzentration an Cu im Vergleich zum Bulkabschnitt aufweist und
wobei ein atomares Konzentrationsverhältnis von Cu zu Mg im Abschnitt unter der Oberfläche etwa 0,2 bis etwa 5,0 beträgt.

2. Aluminiumlegierungsartikel nach Anspruch 1, wobei das Aluminiumlegierungsmaterial umfasst:
0,6 bis 0,95 Gew.-% Si;
0,55 bis 0,75 Gew.-% Mg;
0,05 bis 0,60 Gew.-% Cu;
0,20 bis 0,35 Gew.-% Fe;
0,05 bis 0,20 Gew.-% Mn;
bis zu 0,15 Gew.-% Cr;
bis zu 0,15 Gew.-% Zn;
bis zu 0,15 Gew.-% Ti;
bis zu 0,05 Gew.-% Zr;
bis zu 0,05 Gew.-% Pb;
gegebenenfalls ferner umfassend bis zu 0,10 Gew.-% eines oder mehrerer Elemente ausgewählt aus der Gruppe bestehend aus Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb und Lu; und
bis zu 0,15 Gew.-% Verunreinigungen;
wobei der Rest Al ist.

3. Aluminiumlegierungsartikel nach einem der Ansprüche 1 bis 2, wobei der Aluminiumlegierungsartikel ein gewalztes Aluminiumlegierungsblech oder eine gewalzte Aluminiumlegierungsplatte ist, wobei der Aluminiumlegierungsartikel eine Dicke von nicht mehr als 15 mm oder nicht mehr als 14 mm oder nicht mehr als 13 mm oder nicht mehr als 12 mm oder nicht mehr als 11 mm oder nicht mehr als 10 mm oder nicht mehr als 9 mm oder nicht mehr als 8 mm oder nicht mehr als 7 mm oder nicht mehr als 6 mm oder nicht mehr als 5 mm oder nicht mehr als 4 mm oder nicht mehr als 3 mm oder nicht mehr als 2 mm oder nicht mehr als 1 mm oder nicht mehr als 0,5 mm oder nicht mehr als 0,3 mm oder nicht mehr als 0,1 mm aufweist.

4. Aluminiumlegierungsartikel nach einem der Ansprüche 1 bis 3, wobei das atomare Konzentrationsverhältnis von Cu zu Mg im Aluminiumlegierungsmaterial des Abschnitts unter der Oberfläche mindestens 20% oder mindestens 40% oder mindestens 60% oder mindestens 80% oder mindestens 100% oder mindestens 150% oder mindestens 200% größer als das atomare Konzentrationsverhältnis von Cu zu Mg im Aluminiumlegierungsartikel des Bulkabschnitts ist, basierend auf dem atomaren Konzentrationsverhältnis von Cu zu Mg im Aluminiumlegierungsmaterial des Bulkabschnitts.

5. Aluminiumlegierungsartikel nach einem der Ansprüche 1 bis 4, wobei das atomare Konzentrationsverhältnis von Cu zu Mg im Aluminiumlegierungsmaterial des Abschnitts unter der Oberfläche mindestens 20% oder mindestens 40% oder mindestens 60% oder mindestens 80% oder mindestens 100% oder mindestens 150% oder mindestens 200% größer als ein atomares Konzentrationsverhältnis von Cu zu Mg im Aluminiumlegierungsmaterial eines Abschnitts unter der Oberfläche eines unbehandelten Aluminiumlegierungsmaterials ist.

6. Aluminiumlegierungsartikel nach einem der Ansprüche 1 bis 5, wobei das atomare Konzentrationsverhältnis von Cu zu Mg im Aluminiumlegierungsmaterial des Abschnitts unter der Oberfläche im Bereich von 0,2 bis 4,5 oder von 0,2 bis 4,0 oder von 0,2 bis 3,5 oder von 0,2 bis 3,0 oder von 0,2 bis 2,5 oder von 0,2 bis 2,0 oder von 0,2 bis 1,5 oder von 0,2 bis 1,0 oder von 0,2 bis 0,5 liegt.

7. Verfahren zur Herstellung eines oberflächenmodifizierten Aluminiumlegierungsartikels, wobei das Verfahren umfasst:
Bereitstellen eines Aluminiumlegierungsartikels mit einem Abschnitt unter der Oberfläche und einem Bulkabschnitt,
wobei der Aluminiumlegierungsartikel ein Aluminiumlegierungsmaterial umfasst, das umfasst:
0,2 bis 1,4 Gew.-% Si;
0,4 bis 5,0 Gew.-% Mg;
0,01 bis 2,0 Gew.-% Cu;
0,05 bis 0,50 Gew.-% Fe;
bis zu 0,25 Gew.-% Mn;
bis zu 0,25 Gew.-% Cr;
bis zu 0,15 Gew.-% Zn;
bis zu 0,20 Gew.-% Ti;
bis zu 0,05 Gew.-% Zr;
bis zu 0,05 Gew.-% Pb;
gegebenenfalls ferner umfassend bis zu 0,10 Gew.-% eines oder mehrerer Elemente ausgewählt aus der Gruppe bestehend aus Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb und Lu; und
bis zu 0,15 Gew.-% Verunreinigungen;
wobei der Rest Al ist; und
Inkontaktbringen einer Oberfläche des Abschnitt unter der Oberfläche mit einer oberflächenmodifizierenden Zusammensetzung, wobei das Behandeln ein Durchführen eines Säureätzens und eines alkalischen Waschens umfasst, wobei das Säureätzen dem alkalischen Waschen voran geht;
wobei der Abschnitt unter der Oberfläche des behandelten Aluminiumlegierungsartikels eine höhere Konzentration an Cu im Vergleich zum Bulkabschnitt aufweist,
wobei sich der Abschnitt unter der Oberfläche von einer äußeren Oberfläche des Aluminiumlegierungsartikels bis zu einer Teife von bis zu 5 µm erstreckt und
wobei ein atomares Konzentrationsverhältnis von Cu zu Mg im Abschnitt unter der Oberfläche etwa 0,2 bis etwa 5,0 beträgt.

8. Verfahren nach Anspruch 7, wobei das Bereitstellen umfasst:
Gießen einer geschmolzenen Aluminiumlegierung, um ein Gussprodukt aus einer Aluminiumlegierung zu bilden;
gegebenenfalls Homogenisieren des Gussprodukts aus einer Aluminiumlegierung, um ein homogenisiertes Gussprodukt aus einer Aluminiumlegierung zu bilden;
Walzen des homogenisierten Gussprodukts aus einer Aluminiumlegierung oder des Gussprodukts aus einer Aluminiumlegierung, um ein gewalztes Aluminiumlegierungsprodukt zu bilden; und
Lösungsglühen des gewalzten Aluminiumlegierungsprodukts, um den Aluminiumlegierungsartikel zu bilden.

9. Verfahren nach Anspruch 7 oder 8, wobei das Aluminiumlegierungsmaterial umfasst:
0,6 bis 0,95 Gew.-% Si;
0,55 bis 0,75 Gew.-% Mg;
0,05 bis 0,60 Gew.-% Cu;
0,20 bis 0,35 Gew.-% Fe;
0,05 bis 0,20 Gew.-% Mn;
bis zu 0,15 Gew.-% Cr;
bis zu 0,15 Gew.-% Zn;
bis zu 0,15 Gew.-% Ti;
bis zu 0,05 Gew.-% Zr;
bis zu 0,05 Gew.-% Pb;
gegebenenfalls ferner umfassend bis zu 0,10 Gew.-% eines oder mehrerer Elemente ausgewählt aus der Gruppe bestehend aus Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb und Lu; und
bis zu 0,15 Gew.-% Verunreinigungen;
wobei der Rest Al ist.

10. Verfahren nach einem der Ansprüche 7 bis 9, wobei der Aluminiumlegierungsartikel eine Dicke von nicht mehr als 15 mm oder nicht mehr als 14 mm oder nicht mehr als 13 mm oder nicht mehr als 12 mm oder nicht mehr als 11 mm oder nicht mehr als 10 mm oder nicht mehr als 9 mm oder nicht mehr als 8 mm oder nicht mehr als 7 mm oder nicht mehr als 6 mm oder nicht mehr als 5 mm oder nicht mehr als 4 mm oder nicht mehr als 3 mm oder nicht mehr als 2 mm oder nicht mehr als 1 mm oder nicht mehr als 0,5 mm oder nicht mehr als 0,3 mm oder nicht mehr als 0,1 mm aufweist.

11. Verfahren nach einem der Ansprüche 7 bis 10, wobei die alkalische Lösung zum alkalischen Waschen ein starkes Oxidationsmittel in einer Konzentration von nicht mehr als 500 ppm oder nicht mehr als 300 ppm oder nicht mehr als 100 ppm oder nicht mehr als 50 ppm oder nicht mehr als 25 ppm oder nicht mehr als 10 ppm umfasst.

12. Aluminiumlegierungsartikel, wobei der Aluminiumlegierungsartikel der oberflächenmodifizierte Aluminiumlegierungsartikel hergestellt nach dem Verfahren nach einem der Ansprüche 7 bis 11 ist.

13. Aluminiumlegierungsartikel nach Anspruch 12, wobei der Aluminiumlegierungsartikel ein Automobil, ein Lastkraftwagen, ein Anhänger, ein Zug, ein Eisenbahnwaggon, ein Flugzeug, ein Karosserieteil oder ein Teil eines der Vorhergehenden, eine Brücke, eine Pipeline, eine Leitung, ein Rohr, ein Boot, ein Schiff, ein Lagerbehälter, ein Lagertank, ein Möbelstück, ein Fenster, eine Tür, ein Geländer, ein funktionales oder dekoratives Architekturstück, ein Leitungsgeländer, ein elektrisches Bauteil, ein Kabelkanal, ein Getränkebehälter, ein Lebensmittelbehälter oder eine Folie ist.

## Revendications

1. Article en alliage d'aluminium, comprenant un matériau d'alliage d'aluminium qui comprend :
de 0,2 à 1,4 % en poids de Si ;
de 0,4 à 5,0 % en poids de Mg ;
de 0,01 à 2,0 % en poids de Cu ;
de 0,05 à 0,50 % en poids de Fe ;
jusqu'à 0,25 % en poids de Mn ;
jusqu'à 0,25 % en poids de Cr ;
jusqu'à 0,15 % en poids de Zn ;
jusqu'à 0,20 % en poids de Ti ;
jusqu'à 0,05 % en poids de Zr ;
jusqu'à 0,05 % en poids de Pb ;
facultativement comprenant en outre jusqu'à 0,10 % en poids d'un ou de plusieurs éléments choisis dans le groupe consistant en Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb et Lu ; et
jusqu'à 0,15 % en poids d'impuretés ;
le reste étant de l'Al ;
dans lequel l'article en alliage d'aluminium comprend une portion de sous-surface et une portion de masse
dans lequel la portion de sous-surface s'étend d'une surface extérieure de l'article en alliage d'aluminium à une profondeur jusqu'à 5 µm,
dans lequel la portion de sous-surface de l'article en alliage d'aluminium a une concentration en Cu plus élevée en comparaison à la portion de masse, et
dans lequel un rapport de concentration atomique entre Cu et Mg dans la portion de sous-surface est d'environ 0,2 à environ 5,0.

2. Article en alliage d'aluminium selon la revendication 1, dans lequel le matériau d'alliage d'aluminium comprend :
de 0,6 à 0,95 % en poids de Si ;
de 0,55 à 0,75 % en poids de Mg ;
de 0,05 à 0,60 % en poids de Cu ;
de 0,20 à 0,35 % en poids de Fe ;
de 0,05 à 0,20 % en poids de Mn ;
jusqu'à 0,15 % en poids de Cr ;
jusqu'à 0,15 % en poids de Zn ;
jusqu'à 0,15 % en poids de Ti ;
jusqu'à 0,05 % en poids de Zr ;
jusqu'à 0,05 % en poids de Pb ;
facultativement comprenant en outre jusqu'à 0,10 % en poids d'un ou de plusieurs éléments choisis dans le groupe consistant en Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb et Lu ; et
jusqu'à 0,15 % en poids d'impuretés ;
le reste étant de l'Al.

3. Article en alliage d'aluminium selon l'une quelconque des revendications 1 et 2, l'article en alliage d'aluminium étant une plaque-tôle en alliage d'aluminium laminée ou une tôle en alliage d'aluminium laminée, l'article en alliage d'aluminium ayant une épaisseur non supérieure à 15 mm, ou non supérieure à 14 mm, ou non supérieure à 13 mm, ou non supérieure à 12 mm, ou non supérieure à 11 mm, ou non supérieure à 10 mm, ou non supérieure à 9 mm, ou non supérieure à 8 mm, ou non supérieure à 7 mm, ou non supérieure à 6 mm, ou non supérieure à 5 mm, ou non supérieure à 4 mm, ou non supérieure à 3 mm, ou non supérieure à 2 mm, ou non supérieure à 1 mm, ou non supérieure à 0,5 mm, ou non supérieure à 0,3 mm, ou non supérieure à 0,1 mm.

4. Article en alliage d'aluminium selon l'une quelconque des revendications 1 à 3, dans lequel le rapport de concentration atomique entre Cu et Mg dans le matériau d'alliage d'aluminium de la portion de sous-surface est au moins 20 %, ou au moins 40 %, ou au moins 60 %, ou au moins 80 %, ou au moins 100 %, ou au moins 150 %, ou au moins 200 %, plus élevé que le rapport de concentration atomique entre Cu et Mg dans le matériau d'alliage d'aluminium de la portion de masse, rapporté au rapport de concentration atomique entre Cu et Mg dans le matériau d'alliage d'aluminium de la portion de masse.

5. Article en alliage d'aluminium selon l'une quelconque des revendications 1 à 4, dans lequel le rapport de concentration atomique entre Cu et Mg dans le matériau d'alliage d'aluminium de la portion de sous-surface est au moins 20 %, ou au moins 40 %, ou au moins 60 %, ou au moins 80 %, ou au moins 100 %, ou au moins 150 %, ou au moins 200 %, plus élevé qu'un rapport de concentration atomique entre Cu et Mg dans le matériau d'alliage d'aluminium d'une portion de sous-surface d'un matériau d'alliage d'aluminium non traité.

6. Article en alliage d'aluminium selon l'une quelconque des revendications 1 à 5, dans lequel le rapport de concentration atomique entre Cu et Mg dans le matériau d'alliage d'aluminium de la portion de sous-surface va de 0,2 à 4,5, ou de 0,2 à 4,0, ou de 0,2 à 3,5, ou de 0,2 à 3,0, ou de 0,2 à 2,5, ou de 0,2 à 2,0, ou de 0,2 à 1,5, ou de 0,2 à 1,0, ou de 0,2 à 0,5.

7. Procédé de réalisation d'un article en alliage d'aluminium modifié en surface, le procédé comprenant :
la fourniture d'un article en alliage d'aluminium ayant une portion de sous-surface et une portion de masse, dans lequel l'article en alliage d'aluminium comprend un matériau d'alliage d'aluminium qui comprend :
de 0,2 à 1,4 % en poids de Si ;
de 0,4 à 5,0 % en poids de Mg ;
de 0,01 à 2,0 % en poids de Cu ;
de 0,05 à 0,50 % en poids de Fe ;
jusqu'à 0,25 % en poids de Mn ;
jusqu'à 0,25 % en poids de Cr ;
jusqu'à 0,15 % en poids de Zn ;
jusqu'à 0,20 % en poids de Ti ;
jusqu'à 0,05 % en poids de Zr ;
jusqu'à 0,05 % en poids de Pb ;
facultativement comprenant en outre jusqu'à 0,10 % en poids d'un ou de plusieurs éléments choisis dans le groupe consistant en Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb et Lu ; et
jusqu'à 0,15 % en poids d'impuretés ;
le reste étant de l'Al ; et
la mise en contact d'une surface de la portion de sous-surface avec une composition de modification de surface, dans lequel le traitement comporte la réalisation d'une gravure à l'acide et d'un lavage alcalin, moyennant quoi la gravure à l'acide précède le lavage alcalin ;
dans lequel la portion de sous-surface de l'article en alliage d'aluminium traité a une concentration en Cu plus élevée en comparaison à la portion de masse,
dans lequel la portion de sous-surface s'étend d'une surface extérieure de l'article en alliage d'aluminium à une profondeur jusqu'à 5 µm, et
dans lequel un rapport de concentration atomique entre Cu et Mg dans la portion de sous-surface est d'environ 0,2 à environ 5,0.

8. Procédé selon la revendication 7, dans lequel la fourniture comprend :
le coulage d'un alliage d'aluminium fondu pour former un produit coulé en alliage d'aluminium ;
facultativement l'homogénéisation du produit coulé en alliage d'aluminium pour former un produit coulé en alliage d'aluminium homogénéisé ;
le laminage du produit coulé en alliage d'aluminium homogénéisé ou du produit coulé en alliage d'aluminium pour former un produit en alliage d'aluminium laminé ; et
la mise en solution du produit en alliage d'aluminium laminé pour former l'article en alliage d'aluminium.

9. Procédé selon la revendication 7 ou 8, dans lequel le matériau d'alliage d'aluminium comprend :
de 0,6 à 0,95 % en poids de Si ;
de 0,55 à 0,75 % en poids de Mg ;
de 0,05 à 0,60 % en poids de Cu ;
de 0,20 à 0,35 % en poids de Fe ;
de 0,05 à 0,20 %en poids de Mn ;
jusqu'à 0,15 % en poids de Cr ;
jusqu'à 0,15 % en poids de Zn ;
jusqu'à 0,15 % en poids de Ti ;
jusqu'à 0,05 % en poids de Zr ;
jusqu'à 0,05 % en poids de Pb ;
facultativement comprenant en outre jusqu'à 0,10 % en poids d'un ou de plusieurs éléments choisis dans le groupe consistant en Ni, Sc, Sn, Be, Mo, Li, Bi, Sb, Nb, B, Co, Sr, V, In, Hf, Ag, Y, La, Ce, Pr, Nd, Pm, Sm, Eu, Gd, Tb, Dy, Ho, Er, Tm, Yb et Lu ; et
jusqu'à 0,15 % en poids d'impuretés ;
le reste étant de l'Al.

10. Procédé selon l'une quelconque des revendications 7 à 9, dans lequel l'article en alliage d'aluminium a une épaisseur non supérieure à 15 mm, ou non supérieure à 14 mm, ou non supérieure à 13 mm, ou non supérieure à 12 mm, ou non supérieure à 11 mm, ou non supérieure à 10 mm, ou non supérieure à 9 mm, ou non supérieure à 8 mm, ou non supérieure à 7 mm, ou non supérieure à 6 mm, ou non supérieure à 5 mm, ou non supérieure à 4 mm, ou non supérieure à 3 mm, ou non supérieure à 2 mm, ou non supérieure à 1 mm, ou non supérieure à 0,5 mm, ou non supérieure à 0,3 mm, ou non supérieure à 0,1 mm.

11. Procédé selon l'une quelconque des revendications 7 à 10, dans lequel la solution alcaline pour le lavage alcalin comprend un agent d'oxydation fort à une concentration non supérieure à 500 ppm, ou non supérieure à 300 ppm, ou non supérieure à 100 ppm, ou non supérieure à 50 ppm, ou non supérieure à 25 ppm, ou non supérieure à 10 ppm.

12. Article en alliage d'aluminium, l'article en alliage d'aluminium étant l'article en alliage d'aluminium modifié en surface formé par le procédé selon l'une quelconque des revendications 7 à 11.

13. Article en alliage d'aluminium selon la revendication 12, l'article en alliage d'aluminium étant une automobile, un camion, une remorque, un train, un wagon ferroviaire, un avion, un panneau ou une partie de carrosserie pour l'un quelconque de ce qui précède, un pont, un pipeline, une canalisation, une tuyauterie, un bateau, un navire, un contenant de stockage, une cuve de stockage, un meuble, une fenêtre, une porte, un garde-corps, une pièce architecturale fonctionnelle ou décorative, un garde-corps tubulaire, un composant électrique, un conduit, un contenant à boisson, un contenant alimentaire, ou un opercule.
